# EUROPEAN PATENT APPLICATION

(11) **EP 4 276 777 A1**
(43) Date of publication of application: **15.11.2023**
(21) Application number: 22173345.4
(22) Date of filing: 13.05.2022
(51) Int. Cl.: G06V 40/20

(54) **OBJECT DETECTION IN AN OPERATING ROOM**

(71) Applicant: Baxter Medical Systems GmbH + Co. KG, 07318 Saalfeld (DE)
(72) Inventor: DALBERT, Heinz-Hermann, Charleston (US); LÖSER, Steffen, 07318 Saalfeld (DE); SALVATERRA, Davide, 07318 Saalfeld (DE); LIMBACH, Tobias, 07318 Saalfeld (DE)
(74) Representative: Cope, Alexander Charles Edgerton

(57) **Abstract**

A method of object detection in an operating room is provided. A method of detecting objects in a video stream of an operating room in provided. The method comprises receiving a video stream of an operating room; receiving an audio stream of the operating room; detecting, from video data of the video stream, a first data object corresponding to a first physical object within the operating room; detecting, from the audio stream, audio data corresponding to an audio event within the operating room; determining that the audio data is associated with the first data object; and in response to determining that the audio data is associated with the first data object, detecting, from video data of the video stream, a second data object in dependence on the first data object, the second data object corresponding to a second physical object located in the operating room.

## Description

### TECHNICAL FIELD

This invention relates to a system and method for detecting, monitoring and tracking objects within an operating room. In particular, the invention relates to the use of both video and audio data to enhance object detection within an operating room of a medical establishment such as a hospital.

### BACKGROUND

Technology currently carries an essential role in any up-to-date operating theatre or operating room (OR); lately, the aim to better both the working conditions in the OR and the patient's safety, have attracted a large amount of interest and technological development. Current ORs are filled with extremely specialized high tech apparatus and devices.

In particular, current surgery has grown dependent on video systems thanks to the recent advent of robotics, along with the introduction of minimal invasive surgery, and interventional radiology.

The technology is complex and requires efficiency and organization. Each apparatus present in the OR may cover a specific task, carries its specific monitor, holds its own cabling, along with a command console; each device may be moved around the OR according to the needs of the surgery. The presence of high-tech tools in the OR leads to an increase in complexity within the OR environment, requiring the medical team, and the surgeon in particular, to interact with and control increasingly sophisticated medical equipment, which may not be easy, particularly in sterile environments. Further, the complexity of monitoring and tracking objects within the OR, such as particular medical devices, or patient position or vital signs, increases as the number and complexity of the medical devices within the OR increases.

Further, the addition of state of the art video and audio technology, as well as monitoring technology (heart rate, respiratory information etc.) within the OR means that large amounts of data are collected from the OR. However, it may be challenging to identify important information within this large pool of data, and may even require manually running through hours of recorded video and audio data in order to identify the important information.

An important task of the overall OR System is to provide an environment in which medical devices can be effectively controlled in a user friendly and intuitive way, and also allows for effective data collection in which important information within that data can be identified once collected.

However, previous OR Systems in many cases do not allow intuitive and user friendly interaction and control with the medical devices within the OR, nor for effective data collection and data tagging so that important information can be captured and stored for later access and use.

Accordingly, there is still a need to provide OR systems and methods which solve any or all of the disadvantages of the known approaches described above.

### SUMMARY OF INVENTION

The inventors of the invention described herein have appreciated the need to improve upon the existing systems and methods for operating rooms, ORs, and accordingly have provided an invention, embodiments of which may have benefits including the accurate and reliable tracking and monitoring of objects within the OR, providing timely feedback to the OR to aid in the control and interaction with objects in the OR, and elegant and seamless data tagging, and archiving of collected information. This enhances device control within the OR, object tracking and monitoring within the OR and data collection from the OR.

The systems and methods according to the invention are defined in the appended claims, to which reference is now directed. Optional features are set out in the dependent claims.

A method of detecting objects in a video stream of an operating room, OR, is provided according to a first aspect of this disclosure. The method comprises receiving the video stream of the OR and receiving an audio stream of the OR. The method further comprises detecting, from video data of the video stream, a first data object corresponding to a first physical object within the OR, and detecting, from the audio stream, audio data corresponding to an audio event within the OR. It is determined that the audio data is associated with the first data object; and in response to determining that the audio data is associated with the first data object, detecting, from video data of the video stream, a second data object in dependence on the first data object, the second data object corresponding to a second physical object located in the OR.

The first data object may, in certain examples, comprise an attribute corresponding to an attribute of the first physical object- for example, a particular orientation, position etc. In the example that the physical object is a medical practitioner, the attribute may be data indicating that the medical practitioner is performing a certain gesture such as a pointing gesture. The detection of the first data object may be performed in a single step, where the first data object having the attribute is determined in a single step. For example, in the case of the medical practitioner, the detection may involve detecting pixel data corresponding to a medical practitioner performing the gesture. Alternatively, the detection may involve two steps in which a data object corresponding to a physical object is detected, and then the attribute is detected in a separate step. Once the attribute is detected, the first data object may be considered identified. For example, a data object corresponding to a medical practitioner is detected in a first step, and the data is then analysed/monitored to detect data corresponding to the attribute (the pointing gesture for example). At this point, the first data object corresponding to a medical practitioner performing a pointing gesture is detected. The system implementing the method may be configured - e.g. the software trained - for either case. In these cases, the detection of the second data object in dependence on the first data object may be based on the attribute of the first data object. As is noted elsewhere, the first physical object may not be a medical practitioner, but may be any other object in the OR, such as a patient, a medical device or other device. Here, the attribute of the data object corresponding to such a physical object may correspond to any attribute of the physical object useful for the give use case (e.g. a particular end of a medical device, a particular part of a patient, etc.).

The method may further comprise controlling a physical object in the video data based on the first data object and/or the second data object. For example, once the second data object is detected, information may be collected about the second physical object based on the second data object, for example the position of the second physical object in the OR. The second physical object may be controlled based on this information (e.g. the position of a medical device such as a C-arm, may be adjusted based on its position in the OR). Alternatively, this information may be used to control a third physical object in the OR (e.g. if the patient is the second physical object, and the third physical object is the OR table, the OR table can be controlled based on the patient's position on the table).

The method may further comprise detecting , from video data of the video stream, a third data object corresponding to a third physical object within the OR, and detecting, from the audio stream, audio data corresponding to a second audio event within the OR. It may be determined that the audio data corresponding to the second audio event is associated with the third data object. In response to determining that the audio data corresponding to the second audio event is associated with the third data object, detecting, from video data of the video stream, a fourth data object in dependence on the third data object, the fourth data object corresponding to a fourth physical object located in the OR. In this way, two different objects in the OR may be identified and tracked. Here, the first and the third data objects may be representations of two instances of a medical practitioner pointing (for example at different objects), and the audio data corresponding to the (original) audio event and the second audio event are two spoken commands. For the original point and command, this may be to track one object, e.g. the operating table, and the second point and command may represent the medical professional issuing another command to track a second object, e.g. the patient. In this way, multiple objects may be identified and tracked by the method.

The audio data may be considered associated with the first data object if a predefined sequence is detected in the data. The predefined sequence may be the sequence of detection of first data object and the audio data - e.g. first data object first and audio data second, or vice versa. The sequence may depend on the use case. For example, in the case of a "point and command" use case (discussed in detail below), the pre-defined sequence is the detection of a pointing gesture followed by the detection of a verbal command, but other examples are possible (e.g. detection of a certain patient position followed by an alarm, or a medical device orientation followed by a sound of the medical device, etc.). In certain examples, there may be a predefined time window from detection of the first data object and the audio data. For example, there may be a predefined time window from detection of the pointing gesture within which a verbal command needs to be detected in order for an association to be determined. For example, if the audio data is detected within 3 seconds from the first data object, an association may be established but the time window may be shorter or longer than this, for example 1, 2, 4 or 5 seconds. This time window may be established by machine learning (i.e. the system learning the typical timing for a point and command based on a suitable training data set) or set by a user, or determined in any suitable manner. The time window may not be explicitly determined - rather, the association is determined, for example, by machine learning of what a typical point and command sequence is, and if such a sequence is observed, then the first data object and the audio data are determined to be associated. The first data object, the audio data, and the second data object may be determined through appropriate object and audio detection software as will be discussed further herein.

By using data from both a video stream and an audio stream, a first object in the OR can be accurately and reliably identified, and then used to improve identification of a second object in the OR, and/or used to control a physical object (e.g. the first physical object or the second physical object depending on the use case) in the OR. Video data can be analysed using object detection software capable of detecting pixel data corresponding to physical objects in the OR. However, in a complex environment such as the OR, object detection software alone may be insufficient. For example, simply running object detection software to detect the second physical object from the video data may be inaccurate as there may be multiple of the same object, or objects with similar shapes, in an OR, and the software may fail to identify the intended object. Further, there is the difficulty in knowing when to perform the identification, which may result in the object detection software simply being run at all times, which may be inefficient. Linking the identification of the second physical object with the identification in the data of a first physical object may improve the situation. In particular, if a first physical object is identified first (also using object recognition/detection software), then the identification of the first object can be used to improve detection of the second object. For example, the region of data that may be investigated for the second object may be narrowed based on the first object - e.g. if the first object is a medical practitioner making a pointing gesture, the region to which the practitioner is pointing may be the region within which a search for the second object is performed. Alternatively, or in addition, the control of a physical object in the OR (such as a medical device) can be improved by basing it on the first data object - information regarding the first data object can inform how the physical object should be controlled. However, basing identification of a second data object, or basing control of a physical object, on a first data object alone may be insufficient in the OR environment as it may be difficult to accurately and reliably detect the first object for similar reasons given in relation to the second object. Further, it may be difficult to determine when to identify the first object, and when to then perform the search for the second object/when to control the physical object in the OR. For example, the medical practitioner may be making a generic pointing gesture, perhaps whilst communicating with other members of the medical team, when there is in fact no need for identification of the second object or control of the physical object. This pointing may nonetheless act as a trigger for an unnecessary search for the second object or a controlling operation on the physical operation (e.g. moving a medical device). These issues are resolved by combining detection, using object recognition software, of a first object, with detection, using audio (such as voice) recognition software, of audio data (i.e. an audio data object such as and audio signal having a certain signal profile) that is associated with the first object. Here, by combining two sources of data, an event that occurs in the OR and that requires the detection of the second object can be reliably detected.. As an example, it is only when both a pointing gesture and a command word (a point and "track" command) is detected that the object to which the medical practitioner is pointing is identified. Thus, not only is the detection of the second object/the control of the physical object enhanced, but erroneous or unnecessary identifications are avoided, as a further condition is required to trigger the additional operations. Such techniques may be used to detect and monitor objects in the OR that are under the control of the wider OR control system, or objects that fall outside of the control system. The former case is useful as the monitoring may be used to enhance control of the object. The latter case may be useful as data may be collected regarding objects within the OR that cannot be monitored through direct connections to a central OR system.

Optionally, detecting the second data object in dependence on the first data object comprises identifying a portion or region of the video data in dependence on the first data object, and detecting a second data object in the portion of the video data, wherein the portion corresponds to a spatial region of the OR. Identifying a portion of the video data in dependence on the first data object may comprise identifying a portion of the video data of a pre-determined shape and/or having a predetermined orientation relative to the first data object. Such an orientation may be based on a determined attribute for the first data object, for example, the portion immediately adjacent the attribute of the first data object may be detected. In one example, the first physical object may correspond to a medical practitioner. The first physical object may correspond to a medical practitioner performing a pointing gesture within the operating room. Here, identifying the second data object in dependence on the first data object comprises identifying a portion of the video data corresponding to a spatial region of the operating room to which the medical practitioner is pointing. In this way, only a subset of the video data needs to be searched to identify the second data object. For example, a data region of a pre-set size and shape immediately adjacent the first data object, and in a certain orientation relative to the first data object, may be searched. In one case, the portion/region may be a rectangle immediate adjacent a part of the first data object (e.g. adjacent the attribute of the first data object such as the representation in the video data of the finger of a pointing medical practitioner). This improves efficiency, as well as accuracy and reliability of detection.

Optionally, the second physical object may be a medical device or other appropriate device, patient or another medical practitioner located in the OR. The first physical object may similarly be a medical device or other appropriate device, patient or a medical practitioner located in the OR. The object recognition software can be programmed to recognise any object within the OR as the use case necessitates.

The audio event may be a spoken command issued by a medical practitioner within the OR. The audio event may alternatively be a sound associated with a patient, a procedure or a medical device/other device in the OR.

Determining that the audio data is associated with the first data object may comprise determining, from the audio data and the video data, that the first physical object and the audio event together represent a trigger to identify the second data object and/or to control a physical object in the video data based on the first/second data object. The trigger may be a pre-determined sequence in which the first data object and the audio data is detected. The sequence may be as discussed above, for example comprising one or more of i) a predetermined order of detection of the first data object and the audio data; and ii) a threshold time between the detection of the first data object and the audio data.

In one example, the first physical object corresponds to a medical practitioner. The medical practitioner may be performing a pointing gesture within the OR. Here, the region of the video data corresponds to the spatial region of the OR to which the medical practitioner is pointing, and the audio event is a spoken command issued by a medical practitioner within the OR. Here, determining that the audio data is associated with the first data object may comprise determining that the audio data and the first data object correspond to an object identification command issued by the medical practitioner, the object identification command comprising the pointing gesture and the spoken command. This is a particularly powerful use case (although other use cases are envisaged), as it provides a surgeon with the ability to simply point to an object in the OR, issue a spoken command, and have the OR system identify the object to which the surgeon is pointing. Once the object is identified, different applications are possible. For example, the object can be tagged for archival purposes, or the OR system may begin tracking the object for performance or to issue alerts to the surgeon if the object breaches certain predetermined boundaries (e.g. an operating table being placed at an incorrect orientation, or a patient adopting an incorrect position etc.). It will be appreciated that any suitable object can be combined with any suitable audio event to act as a trigger for the search of a second data object. For example, the first physical object may be a medical practitioner performing a different gesture, such as a raised arm or a shake of the head, or a nod or the head. It is noted that, in these cases, the first data object may be detected in a single step, where data corresponding to a medical practitioner performing a specific gesture is detected, or in two steps, where the medical practitioner is detected by the system first and then the gesture is subsequently detected. The system can be configured - e.g. the relevant software can be appropriately trained - in either way. It will be appreciated that the first physical object may be an object other than a medical practitioner, such as a medical device or a patient. Combinations of physical object and audio event such as patient and alarm, or medical device detection and alarm may act as trigger events for further processing as the use case necessitates.

The method may further comprise applying a metadata tag to the second data object identified in the region of the video data. This can enhance data retrieval and the archival function of the OR. In particular, this may provide a reliable way for important events that occur during a medical procedure to be detected and flagged in the video stream so that the event can be easily found within the data after the medical procedure has finished. Meta data tags may be applied to the first data object or other data objects discussed herein as well.

The method may further comprise tracking the second data object in the video data. Tracking the second data object may comprise tracking the movement of the second data object within the video data so as to track the movement of the physical object within the OR. The method may further comprise issuing alerts to the OR if the movement of the physical object within the OR breaches on or more predefined thresholds. It will be appreciated that tracking may be applied to the first data object or other data objects discussed herein as required by the use case.

This can improve the performance of the medical team as important objects and metrics can be tracked during a procedure which allows the OR system to provide feedback about the object throughout the procedure, e.g. an operating table being placed at an incorrect orientation, or a patient adopting an incorrect position etc., which may improve patient outcomes.

The video stream may be formed from a plurality of video sources - e.g. a colour camera and a depth camera, and in certain cases an infrared camera. The video steam may thus comprise colour data and depth data of the OR. The video stream therefore forms a 3D pixel representation of the OR. The video data of the video stream may be a 3D pixel representation of the OR.

A system for detecting objects in a video stream of an operating room, OR, is provided according to a second aspect of this disclosure. The system comprises a processor configured to: receive the video stream of the OR; receive an audio stream of the OR. Further, the processor is configured to detect, from video data of the video stream, a first data object corresponding to a first physical object within the OR and detect, from an audio stream associated with the video stream, audio data corresponding to an audio event within the OR. The processor is configured to determine that the audio data is associated with the first data object; and in response to determining that the audio data is associated with the first data object, detect a second data object in dependence on the first data object, the second data object corresponding to a second physical object located in the OR. The system may further comprise a video camera device for generating the video stream and a microphone for generating the audio stream. The camera device may comprise a colour camera, depth camera and/or an infrared camera. The video stream may be formed from a plurality of video sources - e.g. the colour camera and the depth camera - and thus comprises colour data and depth data of the OR, forming a 3D pixel representation of the OR.

The first data object may, in certain examples, comprise an attribute corresponding to an attribute of the first physical object- for example, a particular orientation, position etc. In the example that the physical object is a medical practitioner, the attribute may be data indicating that the medical practitioner is performing a certain gesture such as a pointing gesture. The detection of the first data object may be performed in a single step, where the first data object having the attribute is determined in a single step. For example, in the case of the medical practitioner, the detection may involve detecting pixel data corresponding to a medical practitioner performing the gesture. Alternatively, the detection may involve two steps in which the data object corresponding to the first physical object is detected, and then the attribute is detected in a separate step. For example, a data object corresponding to a medical practitioner is detected in a first step, and the data is then analysed/monitored to detect data corresponding to the attribute (the pointing gesture for example). At this point, the first data object corresponding to a medical practitioner performing a pointing gesture is detected. The system implementing the method may be configured - e.g. the software trained - for either case. In these cases, the detection of the second data object in dependence on the first data object may be based on the attribute of the first data object. As is noted elsewhere, the first physical object may not be a medical practitioner, but may be any other object in the OR, such as a patient, a medical device or other device. Here, the attribute of the data object corresponding to such a physical object may correspond to any attribute of the physical object useful for the give use case (e.g. a particular end of a medical device, a particular part of a patient, etc.).

The processor may further be configured to control a physical object in the video data based on the first data object and/or the second data object. For example, once the second data object is detected, the second data object, information may be collected about the second physical object based on the second data object, for example the position of the second physical object in the OR. The second physical object may be controlled based on this information (e.g. the position of a medical device such as a C-arm, may be adjusted based on its position in the OR). Alternatively, this information may be used to control a third physical object in the OR (e.g. if the patient is the second physical object, and the third physical object is the OR table, the OR table can be controlled based on the patient's position on the table).

The processor may further be configured to detect, from video data of the video stream, a third data object corresponding to a third physical object within the OR, and detect, from the audio stream, audio data corresponding to a second audio event within the OR. It may be determined that the audio data corresponding to the second audio event is associated with the third data object. In response to determining that the audio data corresponding to the second audio event is associated with the third data object, the processor is configured to detect, from video data of the video stream, a fourth data object in dependence on the third data object, the fourth data object corresponding to a fourth physical object located in the OR.

Optionally, detecting the second data object in dependence on the first data object comprises identifying a portion or region of the video data in dependence on the first data object, and detecting a second data object in the portion of the video data, wherein the portion corresponds to a spatial region of the OR. Identifying a portion of the video data in dependence on the first data object may comprise identifying a portion of the video data of a pre-determined shape and having a predetermined orientation relative to the first data object. For example, the first physical object may correspond to a medical practitioner. The first physical object may correspond to a medical practitioner performing a pointing gesture within the operating room. Here, identifying the second data object in dependence on the first data object comprises identifying a portion of the video data corresponding to a spatial region of the operating room to which the medical practitioner is pointing.

Optionally, the second physical object may be a medical device or other appropriate device, patient or another medical practitioner located in the OR. The first physical object may similarly be a medical device, other appropriate device, patient or a medical practitioner located in the OR. The object recognition software can be programmed to recognise any object within the OR as the use case necessitates.

The audio event may be a spoken command issued by a medical practitioner within the OR. The audio event may alternatively be a sound associated with a patient, a procedure or a medical device/other appropriate device

As discussed above, the audio data may be considered associated with the first data object if a predefined sequence is detected in the data. The predefined sequence may be the sequence of detection of first data object and the audio data - e.g. first data object detected first and audio data detected second, or vice versa. The sequence may depend on the use case, as discussed above. Determining that the audio data is associated with the first data object may comprise determining, from the audio data and the video data, that the first physical object and the audio event together represent a trigger to identify the second data object and/or to control the physical object in the video data based on the first data object. The trigger may be a pre-determined sequence in which the first data object and the audio data is detected. The sequence may be as discussed above, for example comprising one or more of i) a predetermined order of detection of the first data object and the audio data; and ii) a threshold time between the detection of the first data object and the audio data.

In one example, the first physical object corresponds to a medical practitioner. The first physical object may correspond to a medical practitioner performing a pointing gesture within the OR, the region of the video data corresponds to the spatial region of the OR to which the medical practitioner is pointing, and the audio event is a spoken command issued by a medical practitioner within the OR. Here, determining that the audio data is associated with the first data object may comprise determining that the audio data and the first data object correspond to an object identification command issued by the medical practitioner, the object identification command comprising the pointing gesture and the spoken command. It will be appreciated that any suitable object can be combined with any suitable audio event to act as a trigger for the search of a second data object. For example, the first physical object may be a medical practitioner performing a different gesture, such as a raised arm or a shake of the head, or a nod or the head. It is noted that, in these cases, the first data object may be detected in a single step, where data corresponding to a medical practitioner performing a specific gesture is detected, or in two steps, where the medical practitioner is detected by the system first and then the gesture is subsequently detected. The system can be configured - e.g. the relevant software can be appropriately trained - in either way. It will be appreciated that the first physical object may be an object other than a medical practitioner, such as a medical device or a patient. Combinations of physical object and audio event such as patient and alarm, or medical device detection and alarm may act as trigger events for further processing as the use case necessitates.

The processor may be further configured to apply a metadata tag to the second data object identified in the region of the video data. This can enhance data retrieval and the archival function of the OR. In particular, this may provide a reliable way for important events that occur during a medical procedure to be detected and flagged in the video stream so that the event can be easily found within the data after the medical procedure has finished. Meta data tags may be applied to the first data object or other data objects discussed herein as well.

The processor may be further configured to track the second data object in the video data. Tracking the second data object may comprise tracking the movement of the second data object within the video data so as to track the movement of the physical object within the OR. The method may further comprise issuing alerts to the OR if the movement of the physical object within the OR breaches on or more predefined thresholds. It will be appreciated that tracking may be applied to the first data object or other data objects discussed herein as required by the use case.

The video stream may be formed from a plurality of video sources - e.g. a colour camera and a depth camera, and in certain cases an infrared camera. The video steam may thus comprise colour data and depth data of the OR. The video stream therefore forms a 3D pixel representation of the OR. The video data of the video stream may be a 3D pixel representation of the OR.

A computer-readable medium according to a further aspect of the disclosure is provided having executable instructions stored thereon that when executed, causes any of the system of second aspect to carry out any of the methods of the first aspect.

A method of detecting objects in a video stream of an operating room, OR, is also provided according to a further aspect of this disclosure. The method comprises receiving the video stream of the OR and receiving an audio stream of the OR, the audio stream being associated with the video stream. The method further comprises detecting, from video data of the video stream, a first data object corresponding to a first physical object within the OR, and from the audio stream, audio data corresponding to an audio event within the OR is detected. It is determined that the audio data is associated with the first data object; and in response to determining that the audio data is associated with the first data object, controlling a physical object in the video data based on the first data object. The physical object may be, for example, a medical device such as the operating table, a trocar, a robotic cart, etc., or another device within the OR like a video camera or a television monitor. The control of the physical object based on the first data object may comprise controlling the physical object in a pre-defined manner whilst the first data object is being detected, and once the first data object is not detected in the video data, stopping control of the physical object. For example, the first data object may correspond to medical practitioner performing a gesture, for example a raised hand, and the physical object may be an operating table. Here, the method may move the operating table is a predefined manner (up, down, rotate, tilt etc.) whilst the medical practitioner is performing the gesture (e.g. hand is raised). Once the medical practitioner lowers the hand, the first data object corresponding to the medical practitioner with a raised hand is no longer detected and the movement of the operating table is stopped. The audio event may be a spoken command issued by a medical practitioner within the OR. Other examples are possible as will be apparent herein. Detection of the first data object may be as discussed for the previous aspects.

As discussed above, the audio data may be considered associated with the first data object if a predefined sequence is detected in the data. The predefined sequence may be the sequence of detection of first data object and the audio data - e.g. first data object detected first and audio data detected second, or vice versa. The sequence may depend on the use case, as discussed above. Determining that the audio data is associated with the first data object may comprise determining, from the audio data and the video data, that the first physical object and the audio event together represent a trigger to identify the second data object and/or to control the physical object in the video data based on the first data object. Determining that the audio data is associated with the first data object may comprise determining that the audio data and the first data object correspond to an object control command issued by the medical practitioner, the object control command comprising the gesture and the spoken command. Once the association is detected, the video data may be tagged for archival purposes, for example to indicate an important point in the medical procedure.

A system for detecting objects in a video stream of an operating room, OR, is provided according to the further aspect of this disclosure. The system comprises a processor configured to: receive the video stream of the OR; receive an audio stream of the OR, the audio stream being associated with the video stream. Further, the processor is configured to detect, from video data of the video stream, a first data object corresponding to a first physical object within the OR and detect, from an audio stream associated with the video stream, audio data corresponding to an audio event within the OR. The processor is configured to determine that the audio data is associated with the first data object; and in response to determining that the audio data is associated with the first data object, controlling a physical object in the video data based on the first data object. The physical object may be, for example, a medical device such as the operating table, a trocar, a robotic cart, etc., or another device within the OR like a video camera or a television monitor. The control of the physical object based on the first data object may comprise controlling the physical object in a pre-defined manner whilst the first data object is being detected, and once the first data object is not detected in the video data, stopping control of the physical object. For example, the first data object may correspond to medical practitioner performing a gesture, for example a raised hand, and the physical object may be an operating table. Here, the method may move the operating table is a predefined manner (up, down, rotate, tilt etc.) whilst the medical practitioner is performing the gesture (e.g. hand is raised). Once the medical practitioner lowers the hand, the first data object corresponding to the medical practitioner with a raised hand is no longer detected and the movement of the operating table is stopped. The audio event may be a spoken command issued by a medical practitioner within the OR. Other examples are possible as will be apparent herein. Detection of the first data object may be as discussed for the previous aspects. Determining that the audio data is associated with the first data object may comprise determining, from the audio data and the video data, that the first physical object and the audio event together represent a trigger to identify the second data object and/or to control the physical object in the video data based on the first data object. As discussed above, the audio data may be considered associated with the first data object if a predefined sequence is detected in the data. The predefined sequence may be the sequence of detection of first data object and the audio data - e.g. first data object detected first and audio data detected second, or vice versa. The sequence may depend on the use case, as discussed above. Determining that the audio data is associated with the first data object may comprise determining that the audio data and the first data object correspond to an object control command issued by the medical practitioner, the object control command comprising the gesture and the spoken command. Once the association is detected, the video data may be tagged for archival purposes, for example to indicate an important point in the medical procedure. Data collected from the various data source devices in the OR during a procedure may need to be reviewed after the procedure for a variety of reasons, such as teaching, as part of research, or for legal reasons. The data collected from the various data source devices in the OR during a procedure may be collated and displayed together, simultaneously, and in synchrony, on a single user interface. Such a user interface simultaneously displaying synchronised data streams from multiple data source devices captured during a procedure may provide a viewer with a more complete picture of the events that occurred during the procedure. Such a user interface may also enable a viewer to navigate more quickly and intuitively to important parts of a procedure. Ease of navigation to important parts of a procedure can be particularly beneficial where the procedure is long, complex, or involves multiple different stages.

A graphical user interface according to a further aspect of the disclosure is provided. The graphical user interface comprises at least one window configured to display a video stream. The graphical user interface further comprises a plurality of lanes, each lane being configured to display a data stream synchronised with the video stream displayed in the at least one window. Preferably, at least one of the lanes is configured to display a medical device data stream. Preferably, at least one of the lanes is configured to display a patient physiological data stream. In some embodiments, at least one of the lanes is configured to display an audio stream. Preferably, at least one of the lanes is configured to display a timeline of the video stream. The timeline of the video stream may comprise markers indicating events tagged in the video stream.

The graphical user interface may be configured to display a video stream captured in an OR during a procedure in the OR, and configured to display other data streams also captured in the OR during the procedure simultaneously, and in synchrony, with the video stream. The video stream may be associated with a timestamp. Each of the other data streams may also be associated with a timestamp. The graphical user interface may be configured to compare a timestamp associated with the video stream and a timestamp associated with each of the other data streams to synchronise the video stream and the other data streams.

The data streams captured from data source devices in the OR may include one or more of: video streams; audio streams; medical device data streams; and patient physiological data streams. By way of example, the one or more data source devices in the OR that may capture a medical device data stream may include any one of an x-ray device, an ultrasound device or other medical echo device, a MRI device, a surgical camera, such as an endoscopy device, a trocar, anesthesia pumps. By way of example, the one or more data source devices in the OR that may capture a patient physiological data stream may include any patient physiological monitoring device, such as a heart rate monitor, blood pressure monitor, respiratory monitor etc., or any other suitable device that provides data from the OR.

One or more video streams may be captured in the OR. The one or more video streams may include, by way of example, one or more of: a video stream showing the OR; a video stream showing the surgical table, a video stream showing a medical device in the OR; a video stream showing a medical practitioner in the OR; and a video stream showing an area of a patient supported on the surgical table.

One or more audio streams may be captured in the OR. The one or more audio streams may include, by way of example, one or more of: an OR audio stream; an audio stream from a microphone associated with a medical practitioner in the OR; and an audio stream from a microphone associated with a patient on the surgical table in the OR.

One or more medical device data streams may be captured in the OR. The one or more medical device data streams captured in the OR may include, by way of example, one or more of: a surgical table position data stream; a surgical device data stream; a robotic surgery device data stream; and a surgical lamp data stream.

Once or more patient physiological data streams may be captured in the OR. The one or more patient physiological data streams captured in the OR may include, by way of example, one or more of: a heart rate data stream; a blood oxygen level (SpO2) data stream; a blood pressure data stream; a patient body temperature data stream; and a respiration rate data stream.

In some embodiments, the graphical user interface is configured to display a plurality of video streams. Each displayed video stream may be displayed in synchrony. This may enable different aspects of a procedure in an OR to be viewed at the same time.

The graphical user interface may be configured to display any suitable number of lanes and any suitable number of data streams.

Each data stream from the data source devices in the OR may be timestamped. In particular, each data stream from the data source devices in the OR may be timestamped to enable simultaneous, and synchronous, display of the data streams from the data source devices in the OR. Timestamping each of the data streams from the data source devices may enable the data streams to be combined, or associated with each other at a time after the data stream is captured. Timestamping each of the data streams from the data source devices may enable the data streams to be combined, or associated with each other at a location remote from the OR. The timestamp may be based on a reference time, such as the time in the OR, or any other suitable reference. Each data stream may be timestamped in any suitable manner known in the art. The timestamp may be formatted in any suitable manner. For example, the timestamp may be formatted as: a UNIX time value, a Win32 FILETIME value, CLR System.DateTime value, DOS date/time format; or OLE Automation date format. The timestamp may be stored with the data stream in any suitable manner. The timestamp may be stored in a data file with the data stream as metadata.

The data streams from the data source devices in the OR may be stored as separate data files, or the data streams may be combined and stored as a single data file. Where a data stream is tagged, the tag may be stored as metadata in the data file.

The processing of the data streams may occur at any suitable location, such as at a device or server in the OR or a device or server remote from the OR. Each data stream may be timestamped at the data source device. Alternatively, each data stream may be timestamped at a location remote from the data source device. Each data stream may be stored at any suitable location, either in the OR or remote from the OR.

Preferably, the graphical user interface is configured to display data streams from the data source devices in the OR. Particularly preferably, the graphical user interface may be configured to display two or more data streams from the data source devices simultaneously. Particularly preferably, two or more data streams from the data source devices are displayed simultaneously, and in synchrony, on the graphical user interface in a swim-lane format. In a swim-lane format, each data stream is displayed in a separate lane. For example, a video stream may be displayed in a video lane, an operating table position stream may be displayed in an operating table position lane, and a patient heartbeat stream may be displayed in a heartbeat lane. The video lane, table position lane, and patient heartbeat lane may be displayed simultaneously on the graphical user interface. Each data stream lane displayed in the graphical user interface may be displayed parallel to each other. Each data stream lane displayed in the graphical user interface may be displayed adjacent each other. The data stream lanes may be oriented vertically on the graphical user interface. Preferably, the data stream lanes are oriented horizontally on the graphical user interface.

The data streams displayed in the lanes may be displayed in a graphical format, showing data from the data stream plotted against time.

The graphical user interface may be configured to display a data stream in a lane in any suitable format. For example, the graphical user interface may be configured to display a data stream as a line graph, a bar graph, stacked columns, or scatterplots.

In preferred embodiments, the graphical user interface may be configured to enable a user to select a point on any data stream displayed in a lane. The graphical user interface may be further configured to change the position of the video stream that is displayed on the graphical user interface to the position in the video stream that corresponds to the point selected by a user in the lane. Advantageously, this enables a user to navigate through the video stream to points of interest, which are indicated by the other data streams. For example, where one of the displayed data streams is a patient heartrate data stream, a user may be able to select a position on a lane displaying the patient's heartrate that indicates a time in a procedure when the patient's heartrate significantly increased, and on selection of that point in the lane, the graphical user interface changes the displayed position of the video stream to show the video data captured at that time in the procedure.

In preferred embodiments, the graphical user interface is configured to simultaneously display a video stream captured in the OR during a procedure, and at least one of a medical device data stream, which may include a surgical table position data stream, and a patient physiological data stream. Simultaneously, and synchronously, displaying a video stream, and at least one of a medical device data stream, and a patient physiological data stream may provide a viewer with all of the necessary information to be able to fully assess the procedure, or a part of the procedure, quickly and intuitively. Particularly preferably, the graphical user interface is configured to simultaneously, and synchronously, display a video stream, a surgical device data stream, and a patient physiological data stream.

A method according to a further aspect of the disclosure is provided. The method may comprise: receiving a video stream from an OR; and receiving at least one of a medical device data stream from the OR and a patient physiological data stream from the OR. The method may also comprise: capturing a video stream in an OR; and capturing at least one of a medical device data stream in the OR and a patient physiological data stream in the OR. The video stream may be captured by a camera in the OR. The medical device data stream may be captured from a medical device in the OR. The patient physiological data stream may be captured from a patient physiological data monitor in the OR.

The method may further comprise storing the received data streams. The video stream and the at least one of a medical device data stream and the patient physiological data stream may be stored in a single data file, or stored in separate data files. In these embodiments, the method may be a method of generating a data file comprising data streams from a plurality of data source devices captured in an OR during a procedure.

The method further comprises applying a timestamp to the video stream, and applying a timestamp to the at least one of a medical device data stream and a patient physiological data stream. The timestamp may be associated with the data streams in any suitable way. Preferably, the timestamp is stored in a data file with the data stream as metadata. Advantageously, the timestamp may enable the video stream and the at least one of a medical device data stream and the patient physiological data stream to be associated with each other, and displayed in synchrony with each other.

Preferably, the method comprises capturing a video stream in an OR, a medical device data stream in the OR and a patient physiological data stream in the OR, and applying a timestamp to the video stream, the medical device data stream, and the patient physiological data stream.

The method may comprise comparing the timestamp of the video stream with the timestamp of the medical device data stream and/or the patient physiological data stream. The method may comprise synchronising the video stream and the medical device data stream and/or the patient physiological data stream by comparing the timestamp of the video stream with the timestamp of the medical device data stream and/or the patient physiological data stream.

The method may further comprise displaying the video stream, and the at least one of a medical device data stream and a patient physiological data stream on a graphical user interface, simultaneously, and in synchrony. In these embodiments, the method may be a method of visualising a plurality of data streams captured from a plurality of data source devices in an OR during a procedure. Preferably, the data streams are displayed in a plurality of lanes, as described above. The method may comprise comparing a timestamp associated with the video stream and a timestamp associated with each of the other data streams to synchronise the video stream and the other data streams.

A computer-readable medium according to a further aspect of the disclosure is provided having executable instructions stored thereon that when executed, causes any of the system to perform the method described above.

Where functional modules or units are referred to in apparatus embodiments for carrying out various functions, or steps of the described method(s), it will be understood that these modules or units may be implemented in hardware, in software, or a combination of the two. When implemented in hardware, the modules may be implemented as one or more hardware modules, such as one or more application specific integrated circuits (ASICs), or field programmable gate arrays (FPGAs). When implemented in software, the modules may be implemented as one or more computer programs that are executed on one or more processors.

### BRIEF DESCRIPTION OF THE DRAWINGS

The disclosure will be described in more detail by way of example, with reference to the accompanying drawings, in which:
Fig. 1 is a schematic representation of an operating room system according to aspects of the disclosure;
Fig. 2 is a flow diagram illustrating a process of identifying objects within an OR according to aspects of the disclosure;
Fig. 3 is an image of an exemplary 3D pixel cloud;
Fig. 4 illustrates body tracking techniques according to aspects of the disclosure;
Fig. 5 is a flow diagram illustrating a process according to aspects of the present disclosure;
Fig. 6 is a flow diagram illustrating a process according to aspects of the present disclosure;
Fig. 7 is a schematic representation of an operating room system tracking a patient within the OR according to aspects of the disclosure;
Fig. 8 is a flow diagram illustrating a process of identifying a patient within an OR according to aspects of the disclosure
Fig. 9 is a schematic representation of an operating room system tracking a trocar according to aspects of the disclosure
Fig. 10 is a schematic representation of an operating room system tracking a robotic cart according to aspects of the disclosure
Fig. 11 is a schematic representation of an operating room system tracking instrument counter according to aspects of the disclosure
Fig. 12 is a schematic representation of an operating room system tracking an operating table according to aspects of the disclosure
Fig. 13 is a schematic representation of an operating room system tracking an operating table and a patient according to aspects of the disclosure
Fig. 14 is a schematic representation of an operating room system tracking an operating table and a C-arm according to aspects of the disclosure
Fig. 15 is a schematic representation of an operating room system tracking an operating table and an instrument table according to aspects of the disclosure
Fig. 16 is a schematic representation of an operating room system tracking an instrument table and a person in the OR according to aspects of the disclosure
Fig. 17 is a schematic representation of an operating room system implementing touchless control according to aspects of the disclosure
Fig. 18 is a flow diagram illustrating a process of an operating room system touchless control according to aspects of the disclosure;
Fig. 19 is a schematic representation of an exemplary operating room detection system according to aspects of the disclosure;
Fig. 20 is a schematic representation of an operating control system according to aspects of the disclosure; and
Fig. 21 is a schematic representation of data visualisation according to aspects of the disclosure.

### DETAILED DESCRIPTION OF THE INVENTION

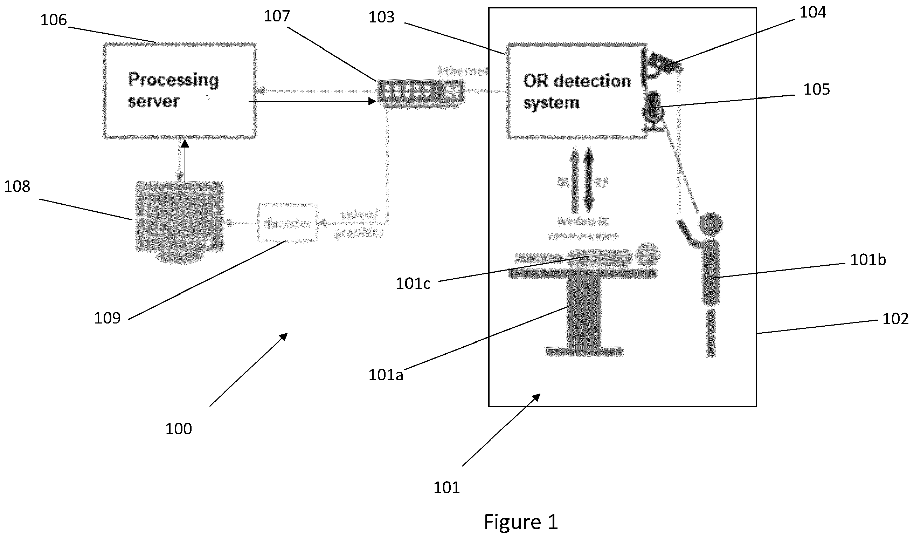

The present disclosure will first present a system overview of an exemplary OR system which may be used to implement the aspects of the present disclosure. We will then discuss various aspects and implementations of the present disclosure under separate headings. For ease of discussion, the term OR system is interchangeable with the term operating room (OR) control system. Whilst the exemplary OR system discussed below in relation to Figure 1 has a number of components, the principles of the present disclosure are not limited to systems comprising all of these components.

### SYSTEM OVERVIEW

Figure 1 shows an exemplary operating room (OR) system 100 comprising one or more physical objects 101, here including a surgical table 101a, a medical practitioner 101b (here the surgeon) and the patient 101c . It will be appreciated that the one or more physical objects 101 may comprise any physical object located in the OR 102, for example, any medical device in the OR 102, or any person in the OR 102 such as the medical practitioner 101b or the patient 101c. Examples of additional possible physical objects include trocars, c-arms, medical trollies, medical imaging devices, medical monitoring device, room cameras or monitors, other medical personnel, among others.

The OR system 100 further comprises an OR detection system 103 comprising one or more cameras 104 to capture image/video data of the OR 102. The one or more cameras 104 may comprise a full colour camera, a depth camera, and/or an infrared camera, which may be provided as separate camera devices, or may be integrated into a single video camera device. In the arrangement of Figure 1, a single video camera device is used having colour, depth and infrared capability. The image/video data thus comprises a video stream comprising colour data, infrared data and depth data of the OR. The OR detection system 103 further comprises one or more microphones 105 to capture audio data of the OR 102 (i.e. data corresponding to sound events occurring in the OR 102). The OR detection system 103 may also comprise any other data source device located within the OR 102. Other data source devices may include any one of an x-ray device, an ultrasound device or other medical eco device, an MRI device, a surgical camera, such as an endoscopy device, a trocar, any medical monitoring device, such as a heart rate monitor, blood pressure monitor, respiratory monitor etc., or any other suitable device that provides data from the OR 102. All these devices can be considered part of the overall OR detection system 103 of the OR 102, although it will be appreciated that each device may occupy a different location in the OR 102. Further, some of these devices may be both a physical object of the one or more physical objects 101 and a data source device of the OR detection system 103. Finally, the OR detection system comprises a processor configured to perform various operations on the data, including object detection and speech recognition as discussed further below.

The OR system 100 further comprises a processing server 106, which may be located outside of the OR 102. The processing server 106 may, for example, be located on the hospital network or on an external network, such as on the Cloud. Alternatively, implementations are possible in which the processing server is located within the OR 102, for example as a local server hosted on a computer within the OR.

The processing server 106 is connected to the OR detection system, here by an ethernet connection via a router 107, that may be located within the OR 102 or outside the OR as appropriate. The router routes data collected by the OR detection system 103, to the processing server 106 for any necessary processing. Although the system of Figure 1 includes this processing server 106, implementations are possible that do not comprise a processing server.

The processing server 106 is also connected to a user device 108, such as a PC or a laptop, for a user to access the processed data held by the processing server 106. The user device 108 may also receive data directly from the OR detection system 103, via router 107 and decoder 109 (the data coming from the OR may be encoded before transmission to the processing server and the user device, which may be performed by router 107 or another suitable encoding device).

The user device 108 and/or the processing server 106 may also be configured to transmit data back to the OR detection system 103. For example, information regarding a detected object, alerts or control signals may be transmitted from the server 106 to the OR, allowing the system 100 to control objects in the OR 102, issue alerts to the OR, or present information to the OR, based on the analysis performed by the server 106.

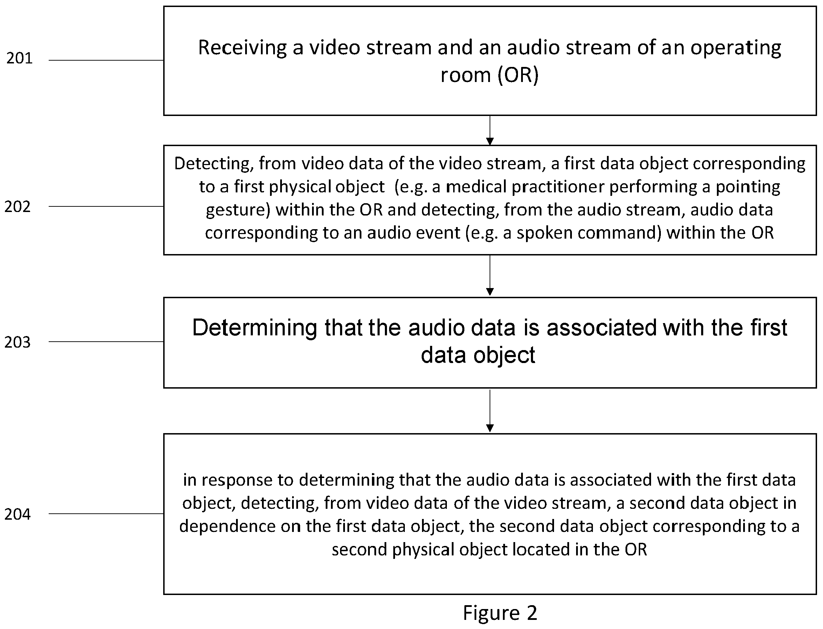

A broad overview of the operation of the OR system 100 according to aspects of the disclosure will now be provided with reference to Figures 2 to 5, before we discuss more detailed implementations under separate headings.

Figure 2 shows the operation of the OR system 100 according to a first aspect of the invention. During operation of the OR system 100, for example, during a medical procedure, the OR detection system 104 collects data from the OR 102, for example video data from camera 104 and audio data from microphone 105. A video stream and an audio stream (i.e. a stream of data) is sent to the OR detection system 103. In other words, the OR detection system 103 receives a video stream of the OR 102, comprising e.g. depth data, colour data and infrared data of the OR 102, and an audio stream of the OR 102. This is shown in step 201 of Figure 2. The audio stream is associated with the video stream in that the streams have been collected in parallel and are thus correlated in time.

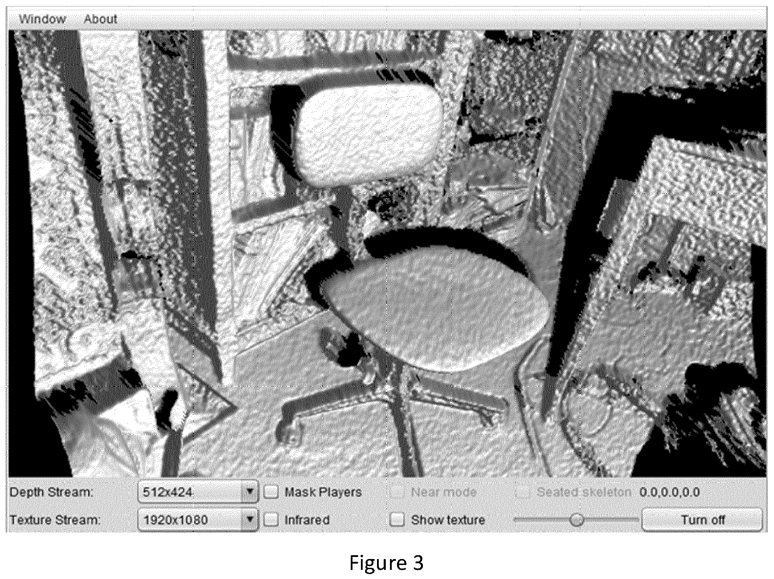

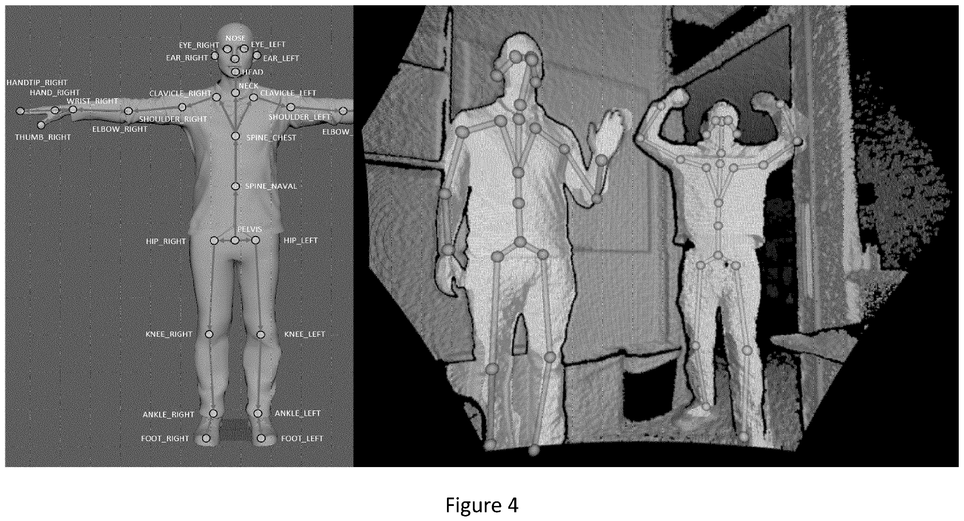

The OR detection system 103 analyses the received data. This analysis is performed by suitable software implemented by a processor or suitable processing unit of the OR detection system. The analysis involves detecting, from video data of the video stream, a first data object corresponding to a first physical object 101 within the OR 102, as shown in step 202 of Figure 2. Here, the video data contains pixel and depth information which forms a 3D pixel cloud representing the OR room. An example of a pixel cloud is shown in Figure 3. The first data object comprises an attribute corresponding to an attribute of the first physical object. The first physical object, in the present example, is physical object 101b, i.e. the medical practitioner/surgeon performing a pointing gesture (it will be appreciated that other gestures may be used, a nod, for example, or even a turn of the head). The attribute of the first data object in this case is data indicating that the medical practitioner is performing a gesture - here, the pointing gesture is the physical attribute of the medical practitioner. The first data object is a 3D pixel representation of the physical object 101b that the processing server has been programmed to recognise. The detection may be performed in a single step, where the detection may involve recognising pixel data corresponding to a medical practitioner performing the gesture. Alternatively, the detection may involve two steps in which a data object corresponding to a medical practitioner is recognised in a first step, and the data is then analysed/monitored to detect data corresponding to the attribute (the pointing gesture for example). In either case, such image recognition techniques can include the use of artificial intelligence techniques, such as machine learning for example deep learning and neural networks. Image recognition techniques can include various techniques for recognising and identifying, classifying, detecting, and tagging objects from images. The image recognition may require the training of a neural network using a training set, which may comprise images/video of objects that are intended to be recognised. Such a neural network may be continuously updated and re-trained. It will be appreciated that the methods described herein may be performed using a wide range of appropriate algorithms and techniques known in the art, and the method is hence not limited in this regard. For example, this may be done by body tracking via machine learning techniques, for example, in which the processing server is trained to recognise a certain organisation of data within the 3D pixel cloud as corresponding to a surgeon performing a pointing gesture. In this case, the human body is represented by its skeleton using a software library (i.e. the x-y-z coordinates of defined bones and joints). An example of this is shown in Figure 4. The processor can then be trained to recognise a surgeon as well as a pointing gesture (in one or more steps) on the basis of a training data set in which the data set comprises video or image data of medical practitioners performing pointing gestures. The training data set may be obtained by using live video footage of an OR, or a 3D model of an OR, or a mock set up. Such object recognition techniques - the machine learning, the training of the processor etc. - are known in the art and so will not be described in further detail. In particular, suitable software packages for object recognition within video data can be implemented as appropriate, and the OR object detection system 103 can be trained to recognise any object within the OR according to the needs of a given use case.

The process continues, at step 202, with detecting, from the audio stream, audio data corresponding to an audio event within the OR. In the present embodiment, the audio event is a command uttered by the surgeon 101b such as "tag" or "track" or other suitable word, but other audio events are possible, such as the sound of an alarm, or the sound of a device being activated etc. The audio data represents a portion of the data contained in the audio stream, the portion corresponding to the audio event. The audio data may be referred to as an audio data object - it is a received audio signal having a certain profile, for example a profile indicative of a spoken word or phrase or other audio event detected by the OR microphone. The OR detection system 103 is programmed to recognise that the audio data corresponds to the audio event - e.g. an audio data object (the audio data) that corresponds to a certain spoken command (audio event). Such audio data recognition techniques can include the use of artificial intelligence techniques, such as machine learning and in particular deep learning and neural networks. Audio recognition techniques can include various techniques for recognising and identifying, classifying, detecting, and tagging "audio events" in a stream of audio data. The audio recognition may require the training of a neural network using a training set, which may comprise data of audio events that are intended to be recognised. Such a neural network may be continuously updated and re-trained. It will be appreciated that the methods described herein may be performed using a wide range of appropriate algorithms and techniques known in the art, and the method is hence not limited in this regard. This may be achieved, for example, by suitable voice recognition and/or speaker recognition software that for example trains via machine learning the server to recognise certain words in the received audio stream. The data set for training the voice recognition software may be obtained from live recordings of the OR, or from mock set ups, or from any suitable audio stream containing appropriate command words. Similar to the object recognition techniques, such voice recognition is known in the art and can be provided by a suitable software package. Such software can be trained to recognise any suitable word, or other audio event, by a suitable data set comprising relevant voice commands/audio events.

The detection of the first data object alone, or the detection of the audio data alone, is not sufficient for the server to take further action. Rather, the OR detection system 103 detects, at step 203 of Figure 2, that the audio data is associated with the first data object, the association being that the first physical object and the audio event together represent a trigger to detect, from video data of the video stream, a second data object in dependence on the first data object, the second data object corresponding to a second physical object located in the OR.. In other words, the processor of the OR detection system 103 is programmed to recognise a relation between the first data object and the audio data, the relation indicating to the processor that it should perform a search for the second data object. In the current example, the relation is that the medical practitioner points and issues a spoken command as a single instruction for the second physical object to be identified. The processor is programmed to recognise this relation - the fact that the first physical object and the audio event represent a single instruction - as an indication that it should search for the second data object. The audio data may be considered associated with the first data object if a predefined sequence is detected in the data. The predefined sequence will generally depend on the use case. For example, in the case of a "point and command" use case, the pre-defined sequence is the detection of a pointing gesture followed by the detection of a verbal command. In certain examples, there may be a predefined time window from detection of the pointing gesture within which a verbal command needs to be detected in order for an association to be determined. For example, if a verbal command is detected within 3 seconds from the point, an association may be established but the time window may be shorter or longer than this, for example 1, 2, 4 or 5 or more seconds. This time window may be established by machine learning (i.e. the system learning the typical timing for a point and command based on a suitable training data set) or set by a user, or determined in any suitable manner. The time window may not be explicitly determined - rather, the association is determined, for example, by machine learning techniques, where a training data set is used in which the first data objection and the audio data are provided in the appropriate relation - e.g. as data corresponding to "point and command" instructions - so that the processing server learns to recognise the relationship between the data object and the audio that is indicative of a trigger to identify the second data object. In other words, the processor learns what a typical point and command sequence is, and if such a sequence is observed, then the first data object and the audio data are determined to be associated. However, it will be appreciated that machine learning techniques are not necessary for determining the association - the association may be a pre-determined set of rules implemented by appropriate software, for example.

Step 204 of Figure 2 is then performed in response to determining that the audio data is associated with the first data object. The process involves detecting, from video data of the video stream, a second data object in dependence on the first data object, the second data object corresponding to a second physical object located in the OR.

This step may comprise identifying a portion of the video data based on the first data object, and identifying a second data object in the portion of the video data. The portion corresponds to a spatial region of the OR. The position of the first data object, or the appropriate attribute of the first data object, is used to set a search window within the overall 3D pixel cloud. This narrows down the area of data the processor of the OR detection system 103 has to search in order to identify the second data object. In the present example, the region of the video data in which the processor searches for the second data object corresponds to the spatial region of the OR to which the medical practitioner is pointing. In other words, the pointing of the medical practitioner is detected in the video data (detected as the first data object having a certain attribute) and that pointing is then used to identify a search region in the 3D pixel cloud within which the second data object is identified. In particular, a search window of a predetermined size and shape within the 3D pixel cloud is generated adjacent to the first data object - e.g. adjacent to the data object corresponding to the finger of the surgeon performing the pointing gesture. This search window thus corresponds to a region of the OR adjacent to the first physical object, here the pointing surgeon. This can be achieved by utilising the body tracking discussed above - i.e. representing the surgeon as a skeleton using an appropriate software library (i.e. the x-y-z coordinates of defined bones and joints). Rules can then be defined, such as: "Focus on the object which is next to the right thumb" or "focus on such and such a sized and shaped region next to the pointing index finger". Such rules may be implemented in software as appropriate. This improves identification of the second data object, as a smaller region of data needs to be searched, and it is a region in which the second data object is highly likely to be found as the region corresponds to where a surgeon is pointing. As above, the processing server is programmed to recognise the second data object, in the same manner as discussed in relation to the first data object - e.g. via machine learning and being trained on an appropriate data set using suitable software packages. The second data object may correspond to any object located in the OR depending on the use case. For example, the second physical object may be a medical device, such as a surgical table, a trocar, and endoscope etc., a patient or another medical practitioner located in the OR.

Once the second data object is identified, the OR detection system 103 may proceed in a number of different ways depending on the use case. For example, the second data object may be tracked by the OR detection system 103 once identified. Tracking the second data object may comprise tracking the movement of the second data object within the video data so as to track the movement of the second physical object within the OR. This tracking may be for monitoring purposes, e.g. alerts may be issued to the OR if the movement of the physical object within the OR breaches on or more predefined thresholds. For example, if the second data object corresponds to a medical device such as a trocar, the OR detection system 103 can track every change in position and orientation of the trocar and report this back to the surgeon in the OR 102. This information can be used by the surgeon or other devices within the OR 102 to maintain the trocar in an acceptable position and orientation, i.e. the information regarding the change in position may be used to enhance the control of the medical device (here the trocar) within the OR 102. Further, alerts may be issued by the OR detection system 103 if the tracking shows that the trocar has shifted position or orientation in a way that exceeds predefined limits. Such a violation can be recorded as metadata in the video data in the same way as discussed above. Alternatively, if the second data object corresponds to the patient, the position of the patient on the operating table may be tracked, with alerts being issued if the patient's position changes in a manner that violates pre-defined boundaries, for example if the patient's arm slips off the operating table, this may be detected and an alert issued to notify the medical practitioners within the OR. Other examples are detailed below.

Thus, the processor of the OR detection system 103 receives as input the 3D pixel data, RGB images, and infrared images from the camera device 104, and analogue audio from microphone 105. The trained software of the processor operates on the inputs, as discussed above, to identify an object of interest in the OR. The output of the processor is a digital output, the content of which depends on the use case. The digital output may comprise timer values, on/off states, warning output/alerts, position and location of different devices, video snapshots, QR code recognition, configuration setup generally etc.

The OR detection system 103 may also send the output data (triggers, tags, timer values, warning messages, etc.) to the processing server for additional processing. In other words, the OR detection system 103 generates an output, which it sends via router 107 to the processing server 106 for the server to e.g. comment something into the EMR, to tag a recorded video stream, etc.) For example, the processing server receives the digital output from the OR detection system 103, which may include data regarding the identified second object. The processing server 106 matches this data to a video stream of the OR (this will generally be a different video stream to that collected by camera device 104) collected by a camera in the OR (e.g. an OR video camera other than camera 104) and tags the second data object - a metadata tag may be applied to the second data object. The metadata tag may be a label identifying the second physical object, or identifying a particular event associated with the object, for example the point at which the object is used in the medical procedure or adopts a certain position (e.g. a position of the surgical table) or when a certain threshold is violated (a patient vital sign for example). This may be in response, for example, to the server 106 receiving output from the OR detection system 103 indicating that the surgeon has pointed to the physical object corresponding to the second data object and uttered the command "tag". Once tagged, the video data may be archived in memory by the processing server. The metadata tag may then allow a search for the second data object to be performed at user device 108 by a user outside the OR 102. For example, the user may be able to search for particular objects within the video stream, when they are used during the procedure, when a patient or object adopted a particular position, or violated a certain threshold, based on the tagging. This allows a user to search for particularly noteworthy (in this example as determined by the surgeon) events that occurred during the procedure, rather than manually scrolling through the entire video stream. The search function may be provided by an appropriate metadata searching algorithm or software package that allows the user to identify the tagged data using appropriate search criteria.

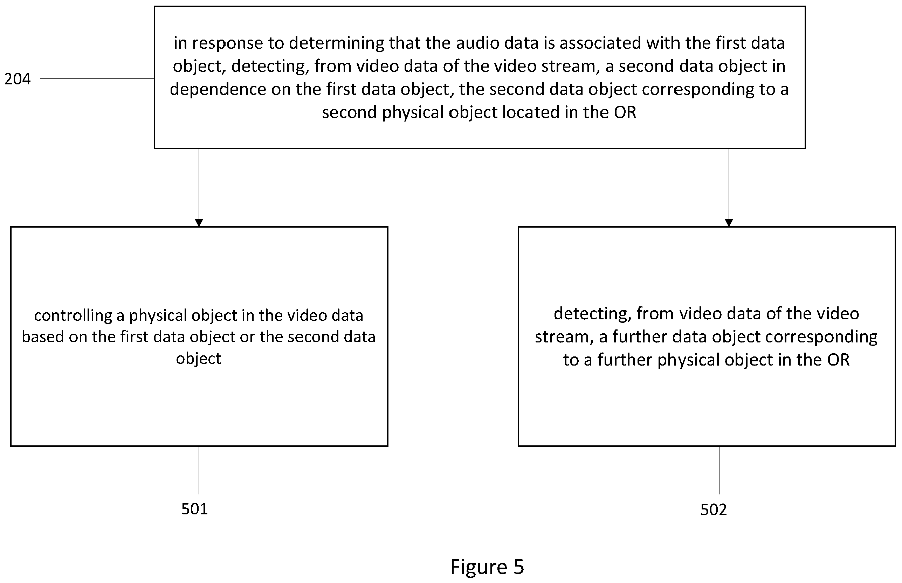

The process of Figure 2 may involve optional additional steps, as shown in Figure 5. One optional additional step is shown as step 501. Here, once the second data object is detected, the system further controls a physical object in the video data based on the first data object or the second data object. For example, once the second data object is detected, information may be collected about the second physical object based on the second data object, for example the position of the second physical object in the OR. The second physical object may be controlled based on this information (e.g. the position of a medical device such as a C-arm, may be adjusted based on its position in the OR). Alternatively, this information may be used to control a third physical object in the OR (e.g. if the patient is the second physical object, and the third physical object is the OR table, the OR table can be controlled based on the patient's position on the table). Alternatively, the control may be based on the first data object. Here, the system may identify the second data object for the uses discussed above, and in parallel control a physical object in the OR (a medical device for example) based on, for example, the gesture of the medical practitioner. In this way, the pointing gesture (or other gesture) of the medical practitioner may be used for the simultaneous identification of a second data object corresponding to a physical object in the OR and the control of a physical object in the OR (the controlled object and the identified object may be the same or different). For example, the surgeon may simultaneously command the second object to be tracked and controlled - e.g. track the surgical table and move the table. For such an example, it will be appreciated that the control of the object need not follow step 204 as shown in Figure 5 for ease of illustration; this control step may be performed in parallel to step 204.

A second optional additional step is shown as step 502, where an additional data object corresponding to a further physical object in the OR is detected. Step 502 may be implemented in two different ways. Firstly, the OR detection system may be configured to use the first data object and the audio data of the audio event to detect both the second data object and the further data object. In other words, the system performs the steps of Figure 2, both with the addition to step 204 that in response to determining that the audio data is associated with the first data object, the system detects, from video data of the video stream, both a second data object and the further data object in dependence on the first data object, the second data object corresponding to a second physical object located in the OR, and the further data object corresponding to a further physical object in the OR. As an example, a medical practitioner 101b may point towards both the table and the patient and issue a voice command such as "track patient and table top", and the OR detection system will be configured to identify the patient and the table top. Secondly, the OR detection system runs through two iterations of the method of Figure 2 to separately detect the second data object and the further data object. Here, two separate point and command operations can be performed by the surgeon and each one detected by the system independently - e.g. the surgeon points to the table and issues the command "track patient" and the system follows the steps of Figure 2 to identify the data object corresponding to the patient in the OR. The surgeon then, separately, points to the table top and issues the command "track table top" and the system follows the same steps of Figure 2 in order to identify the table top in addition to the patient.

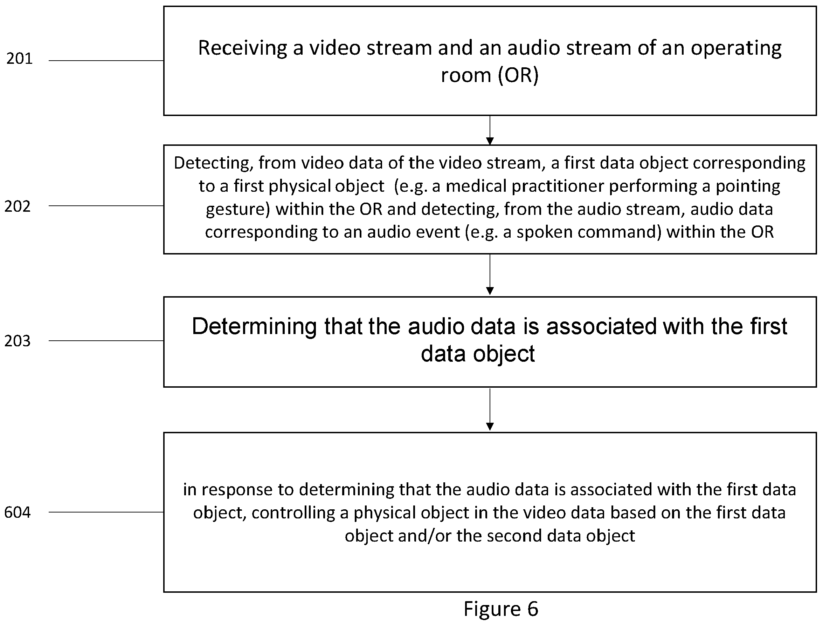

Alternative examples are possible. In particular, there may be no second object identification at all, as illustrated in Figure 6. In such cases, the OR detection system 103 implements the first three steps of Figure 2, but instead of implementing step 204, implements step 604. Here, in response to determining that the audio data is associated with the first data object, the system controls a physical object in the video data based on the first data object. In these cases, the system may simply detect a voice command and a gesture (such as a raised arm) as a single instruction to move a medical device, for example a surgical table. The surgeon may raise an arm and issue the command "move up". The server will detect the data object in the video stream that corresponds to the raised arm, the audio data that corresponds to the "move up" command, and the association between the raised arm and the move up command (i.e. that they represent a single instruction). The OR detection system 103 then sends a command signal to the surgical bed, for the bed to move in an upward direction while the surgeon's arm is raised. When the surgeon lowers the arm, this is detected and the OR detection system 103 stops movement of the bed.

The tagged video data may be presented to a user operating user device 108.

With the above overview of the system provided, various exemplary embodiments will now be provided.

### PATIENT MONTIORING

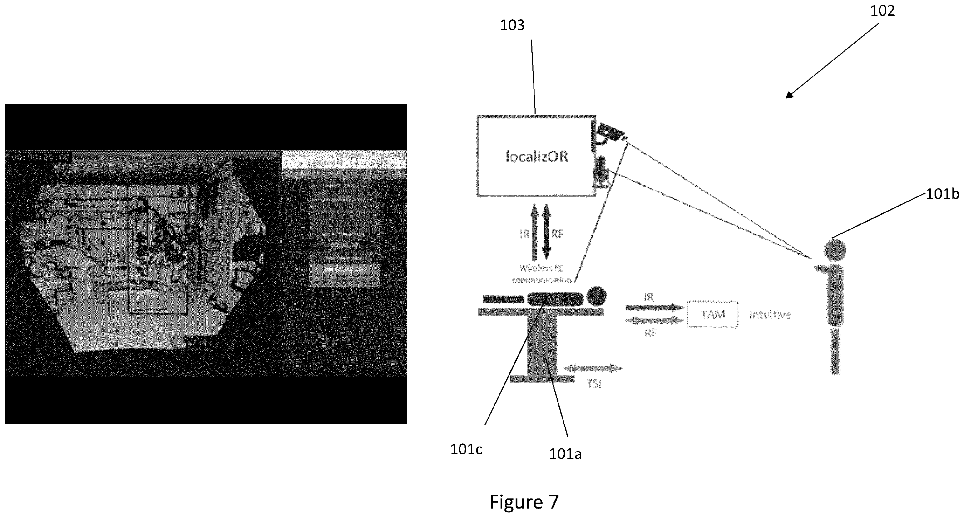

Figure 7 shows a first embodiment implementing aspects of the present disclosure. Here, the presence of a patient 101c on an operating table 101a within the OR 102 is monitored. TAM refers to a table access module, which is simply a wireless interface device for the operating table in the OR.

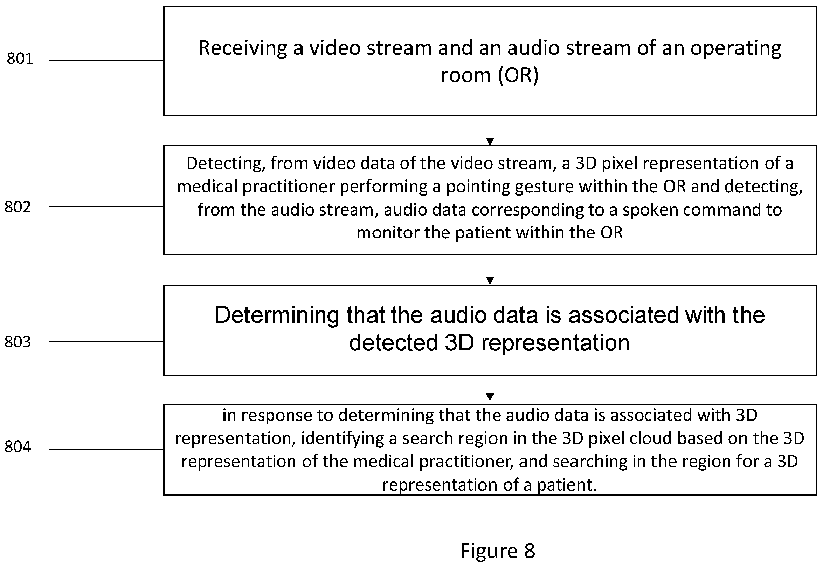

As is shown in the flow diagram of Figure 8, in operation according to this embodiment, the OR detection system 103 receives a video stream and an audio stream from the camera and microphone of the OR detection system at step 801. The video stream comprises depth, colour and infrared data of the OR 102, and the audio stream comprises audio data of audio events occurring in the OR.

At step 802, the OR detection system 103 detects, from the video data, the 3D pixel representation in the video data of the medical practitioner 101b that is performing a pointing gesture towards the patient 101c. This detection is performed using the object recognition techniques discussed above. In particular, the OR detection system is trained to recognise the arrangement of the 3D pixels that corresponds to a human body pointing. The OR detection system 103 also detections from the audio stream, audio data corresponding to a spoken command issued by the medical practitioner 101b to monitor the patient 101c within the OR. The detection is performed by voice recognition techniques as discussed above, where the OR detection system is trained to recognise certain command words such as "monitor patient" or "track patient".

At step 803, the OR detection system 103 determines that the audio data is associated with the detected 3D representation - i.e. that the audio data and the 3D representation have been detected in a sequence that corresponds to a pre-defined sequence that is indicative of a point and command instruction issued by a medical practitioner. For example, the detection of the 3D representation of the pointing gesture is followed closely in time by the detection of an expected command word.

Step 804 is performed in response to the determination of the association. At this point, the OR detection system 103 identifies an region of the 3D pixel cloud that is adjacent to, or near to, or in the direction of, the representation of the finger being used by the surgeon to point to the patient. The shape and volume of the region may be predetermined (it may be a rectangular or spherical volume, for example. In one example, it may be a cuboid having a fixed height of a typical human body). In this region, the OR detection system 103 searches for a second data object corresponding to a second physical object in the OR, here a 3D pixel arrangement that the system has been trained to recognise as a patient (i.e. a human body). The training may be performed in the same manner as for the identification of the medical practitioner, for example.

Once the patient 101c has been identified by the OR detection system 103, the patient is tracked. For example, it is then possible to detect if the patient enters or leaves the operating table 101a, calculate the time a patient is on the table, detect if the patient's position on the table changes or violates certain predefined table boundaries, etc. For example, if a patient slips of the operating table, this may be detected and an alert issued by the OR detection system 103 to the medical practitioner who can then correct the patients position on the table.

The information may be used to improve performance of in-built force sensors of the operating table. For example, tracking the patient allows detection of the patient approaching the table, which allows the sensors to be reset to zero (force sensors can drift over time), to provide a more accurate reading once the patient is on the table. Further, patient tracking allows force measurements to be taken once the patient is determined as being still. This improves sensor readings, for example patent weight estimation or determination of patient centre of gravity.

The system is also able to provide this information to the control system of the operating table, or to display this information to the medical practitioner (for example via a control panel in the OR). Optionally, the information can be provided to partner devices in the OR for improved device control, or the information can be provided to the external server 106 for tagging and archiving - e.g. the time the patient enters and leaves the operating table may be tagged as metadata in the video stream that is saved for playback of the procedure. This would allow a user to subsequently search exactly when a patient is placed on, and taken off, the operating table.

Alternatives are possible. For example, the patient may not be identified by the OR detection system using a pointing gesture. Rather, a medical practitioner may indicate a region of the OR for the OR detection system to search by pointing to four points surrounding the patient in the OR, and the OR detection system may use these four points to form a search area in the pixel data within which to search for the patient. Alternatively, the OR detection system may simply detect the patient by analysing the entire 3D point cloud of the OR, in which case no identification of the surgeon or voice detection is necessary.

### OBJECT TRACKING

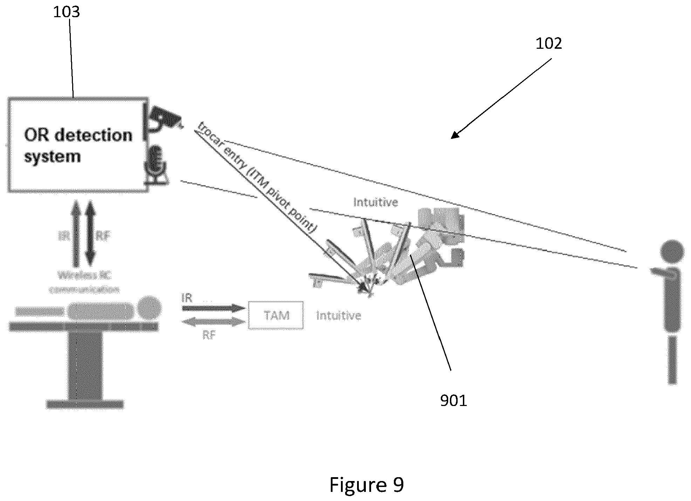

Figure 9 shows a second embodiment implementing aspects of the present disclosure. Here, a trocar 901 is tracked within the OR 102. The second embodiment is substantially the same as the first embodiment except that the second data object is a 3D pixel representation corresponding to a trocar; the OR detection system 103 has been trained and configured to identify a trocar based on a medical practitioner's point and command instruction - i.e. a point and "track trocar" instruction. As with the first embodiment, the association between the pointing gesture and the spoken command is detected based on a predefined sequence. In this embodiment, the sequence is to detect a pointing gesture with , e.g., the right hand and the subsequent detection of a keyword "track trocar". After this, the OR detection system 103 attempts to identify a trocar-like object right beside the operators right hand.

Once the trocar has been identified, the trocar can be tracked. This may involve tracking the trocars position, for example the trocars coordinates within the OR defined in relation to the coordinates of the operating bed, and/or tracking the orientation of the trocar relative to the operating table. These coordinates may be transferred to the trocar control device to control the trocar.

As with the first embodiment, alternatives to this embodiment are possible, for example different gestures for identifying the trocar, or straight identification of the trocar without use of a surgeon's gesture.

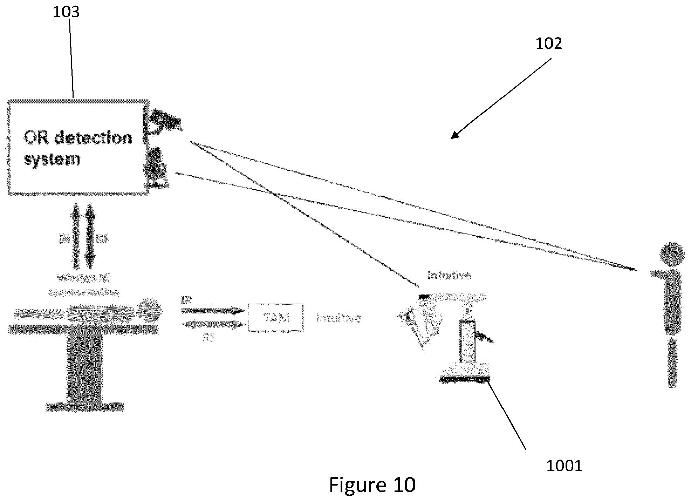

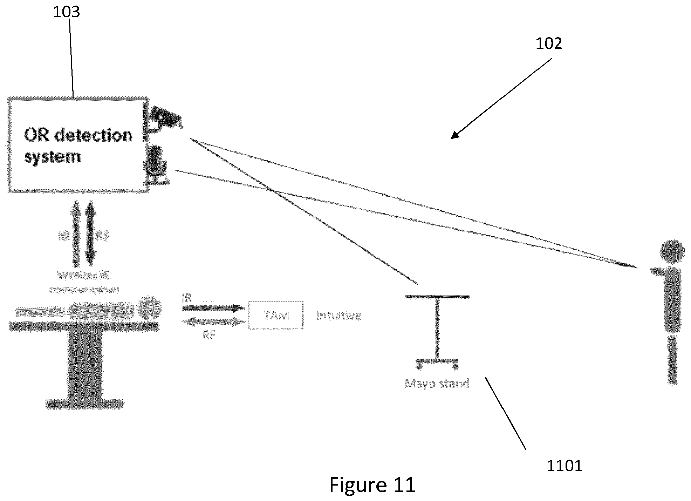

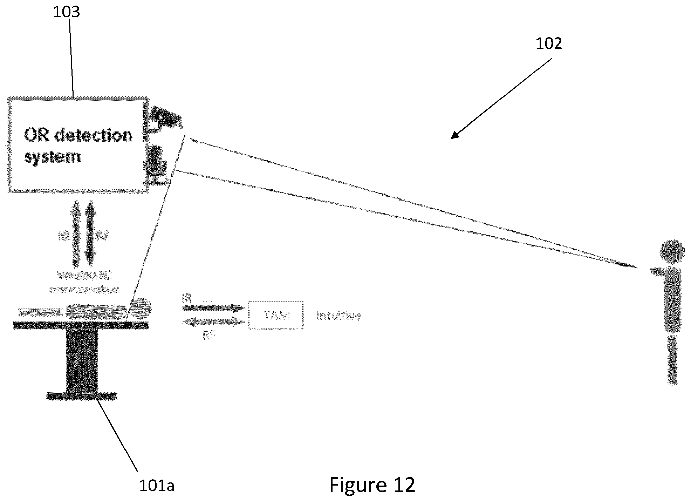

Further, medical devices other than, or in addition to, the trocar can be tracked in the same way as discussed in relation to the trocar. For example, Figure 10 shows the tracking of a robotic cart 1001 in the OR. Figure 11 shows the tracking of an instrument counter 1101. Here, the number of instruments (e.g. sponges) on the instrument counter may be counted. This number may be linked to the stage of the operating procedure to ensure the correct number of instruments are on the counter for that stage in procedure according to protocol. Figure 12 shows the tracking of the operating table 101a itself, for example its position, elevation , orientation etc. This can be linked to the procedure being performed to ensure the table is in the right position according to protocol given the stage of procedure. Further, information about the table, such as a QR code, may be detected and used to assist pairing the table with other medical devices or with the central control unit or table control unit. Similarly, information may be collected that may help determine when the table should be unpaired from other devices, such as information indicating the end of a procedure (table adopting a certain position etc.). This information may also be fed back to the medical practitioner (e.g. via a central control panel) for the surgeon to control the table accordingly, or the information may be used directly by an operating table control unit to automatically control the table.

### MULTIPLE OBJECT TRACKING

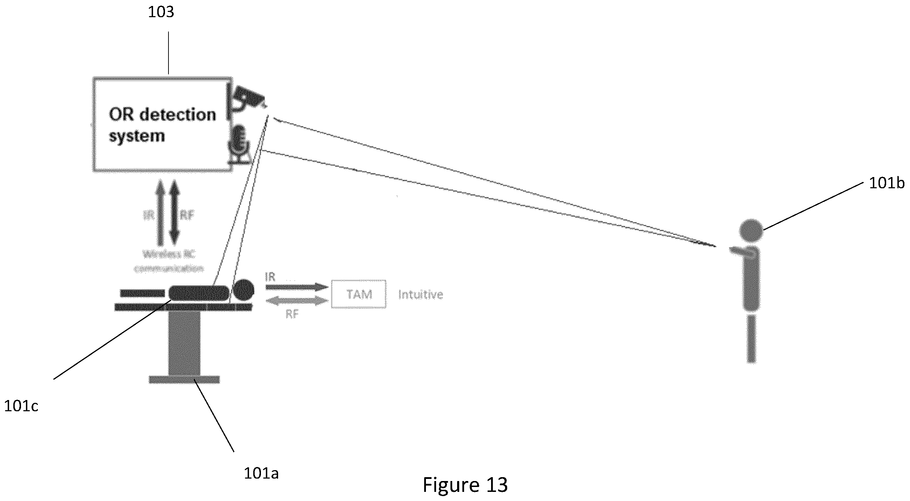

Embodiments are possible in which multiple objects in the OR 102 are monitored (tracked) simultaneously. In the embodiment shown in Figure 13, both the patient 101c and the top of the OR table 101a are tracked. Here, the medical practitioner 101b may point towards both the table and the patient and issue a voice command such as "track patient and table top", and the OR detection system will be configured to identify the patient and the table top and start tracking these objects. This may be done by appropriate machine learning as discussed above. In such a case, the association between the gesture and the command is the sequence - detect pointing gesture and then detect command "track patient and table top". On detecting this, the OR detection system is configured to search the 3D pixel cloud in proximity to the pointing gesture for the 3D pixel representations of two objects it has been trained to recognise - 1) the patient, and 2) the OR table. Once the OR detection system has identified both objects, it can track both objects in parallel. Alternatively, two separate point and command operations can be performed by the surgeon and each one detected by the system independently - e.g. the surgeon points to the table and issues the command "track patient" and the system follows the steps of Figure 6 to identify and monitor the data object corresponding to the patient in the OR. The surgeon then, separately, points to the table top and issues the command "track table top" and the system follows the same steps of Figure 6 except in step 604 the system searches the region of the 3D pixel cloud for the table top in order to identify and monitor the table top in addition to the patient.

Here, the information from both objects can be collected and used to provide information to the medical practitioner or improve control of medical devices in the OR (such as the operating table itself). For example, the patients weight and dimensions may be matched to table top configuration and dimensions to determine how the table should be moved for a given patient, or to determine if the table is in an appropriate position for the patient. If any breaches of protocol are detected based on the tracked information, alerts may be issued to the medical practitioner, and control of the table may be adjusted accordingly, for example, to slow down table movement or block movement entirely if necessary. One example is to use the patient and table information to estimate the centre of gravity of the patient and table and to issue an alert if the centre of gravity changes to an unacceptable value.

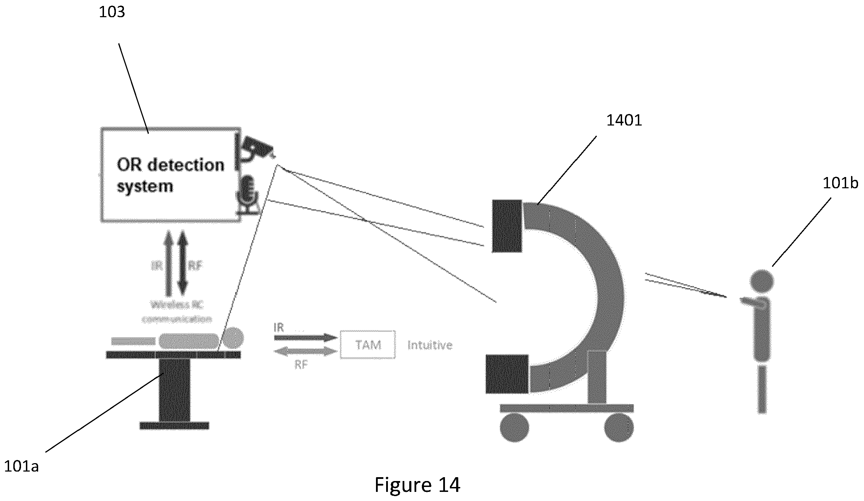

In the embodiment of Figure 14 the table 101a and a C-arm 1401, and optionally, the patient, are tracked. The position of the C-arm in relation to the table can be determined and compared to a pre-set position stored in memory. This information can be used for repositioning the position of the C-arm. Further, position of the patient may be adjusted, or patient movements may be guided based on the information for optimum C-arm positioning.

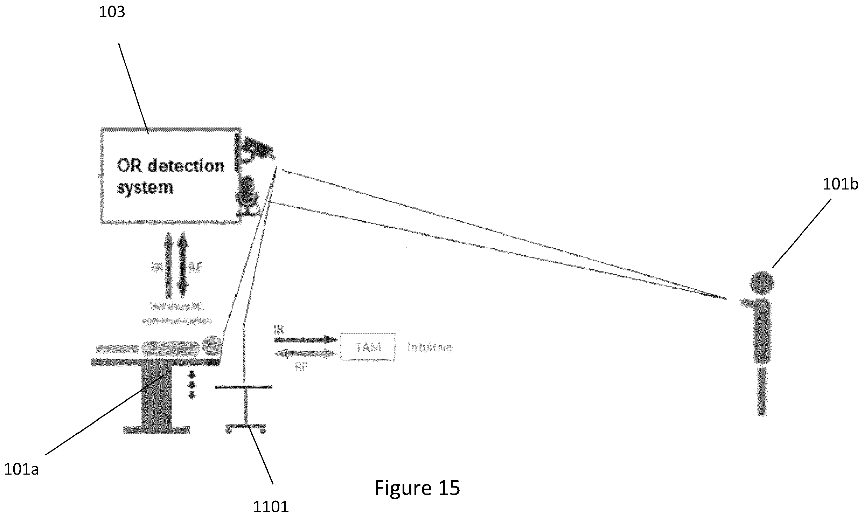

In Figure 15, the top of table 101a and the instrument counter 1101 are monitored to alert the medical practitioner if a collision between the operating table and the counter is likely.

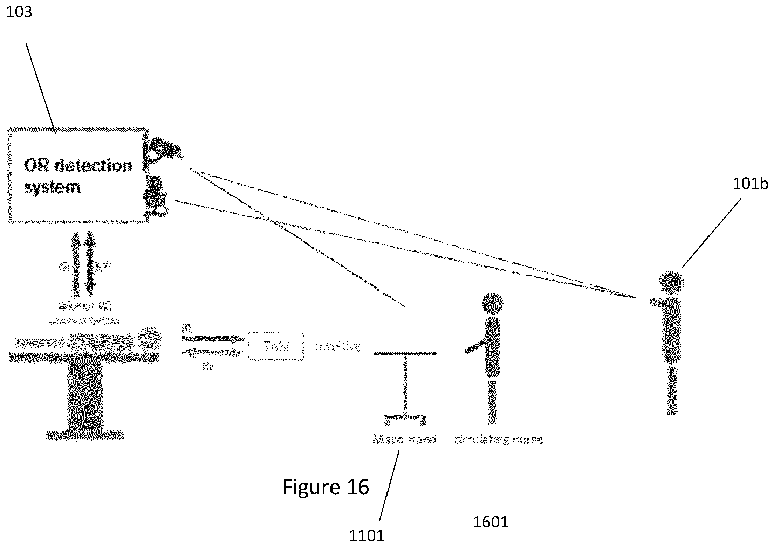

In Figure 16, an instrument counter 1101 and a nurse 1601 are monitored for a potential sterility breach. For example, the surgeon may indicate to the OR detection system that the instrument counter 1101 represents a sterile region of the OR. This may be done by pointing at the instrument counter and issuing the command "sterile area". Alternatively, this may be done by setting a rectangle for the sterile area: e.g. point to the first corner using right hand, and command "first corner"; proceed same way with the second, third and fourth corners; and finish by issuing the command: "protect sterile field". The OR detection system 103 then monitors this area, and if a nurse approaches this area, a warning sound may be issued into the OR an alert issued to the surgeon.

### TOUCHLESS CONTROL

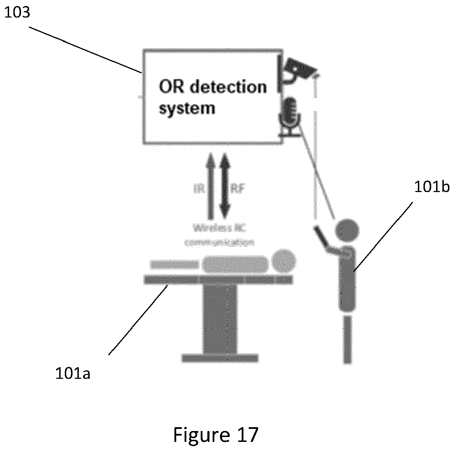

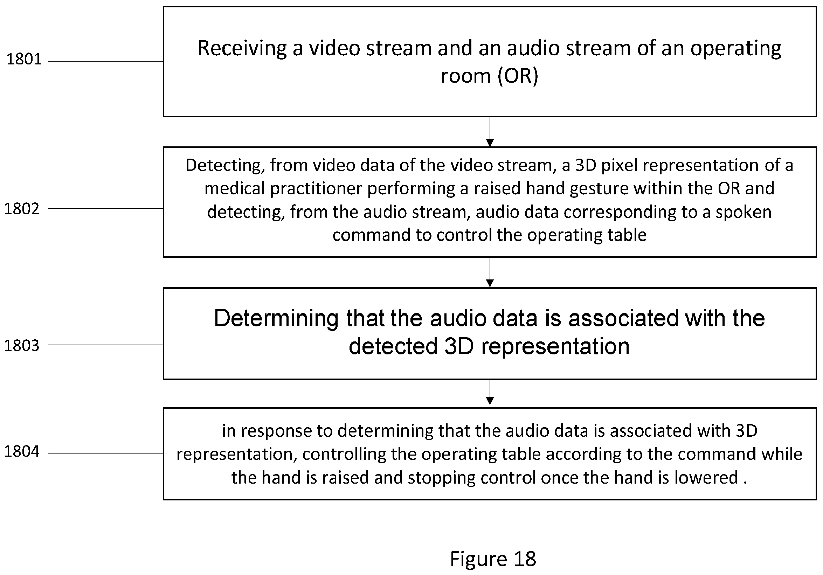

In the embodiment of Figure 17, the movements of the medical practitioner 101b are monitored and used to control the operating table 101a. In this embodiment, a second data object corresponding to a second physical object in the OR is not determined. Rather, the process shown in Figure 18 is followed. At step 1801, a video stream and an audio stream from the OR are detected by the OR detection system 103. At step 1802, a 3D pixel representation of a medical practitioner performing a raised hand gesture within the OR is detected from the video data of the video stream. Further, audio data corresponding to a spoken command to control the operating table (e.g. "move table up") is detected in the audio stream. This detection step is performed as described above - e.g. via appropriate software techniques, object and voice recognition, machine learning etc.

At step 1803 an association between the detected data object and the audio data is determined. This may be based on an expected sequence, for example, detect a raised hand followed by a command "move table up". In response to this determination, the OR detection system 103 may control the table to move the table upwards until the medical practitioner lowers the hand. In other words, the OR detection system tracks the medical practitioner and detects when the hand has been lowered.

Alternatives are possible. For example, other medical devices may be controllable in this way, and may be controllable by different gestures (pointing, head movements etc.).

### DATA COLLECTION AND FURTHER PROCESSING

The data collected from all these various use cases may, in each case, be transmitted to the server 106 for additional processing, data tagging/data searching at the user device 108 etc, as appropriate for the use case involved.

### EXEMPLARY OR DETECTION SYSTEM

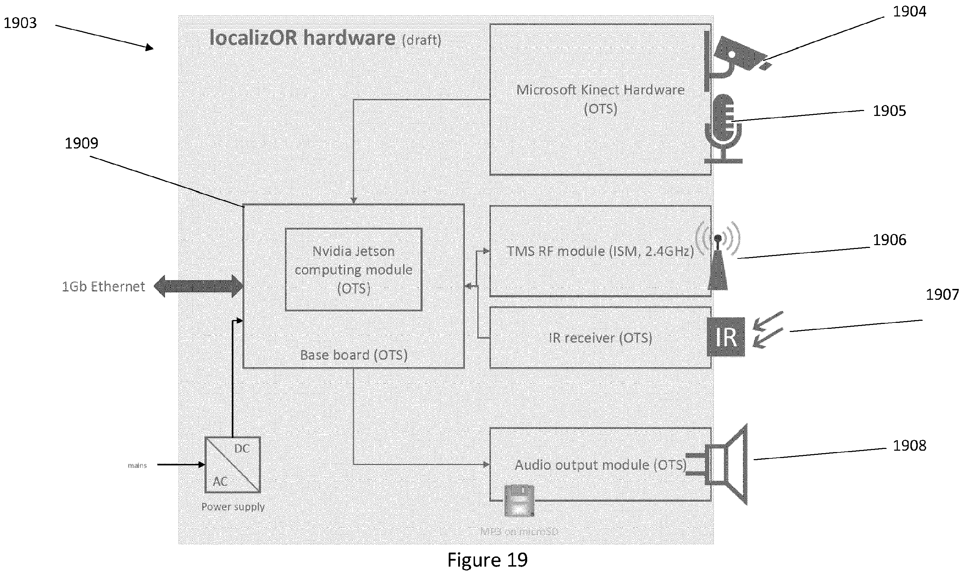

Figure 19 shows an exemplary OR detection system 1903 that may be used to implement aspects of the disclosure. The OR detection system 1903 comprises a video camera 1904 and microphone 1905 as discussed in relation to Figure 1. Here, the video camara and microphone devices are Microsoft Kinect^{™} Hardware. The OR detection system further comprises a TMS RF module 1906 (ISM, 2.4 GHz), a separate infrared IR receiver 1907, and a separate audio output module 1908. The processor 1909 of the system 1903 is an Nvidia Jetson^{™} computing module on a base board. The OR detection system 1903 is electrically connected to a mains power supply, and is connected to the network via a 1Gb Ethernet connection.

### DATA VISUALISTION

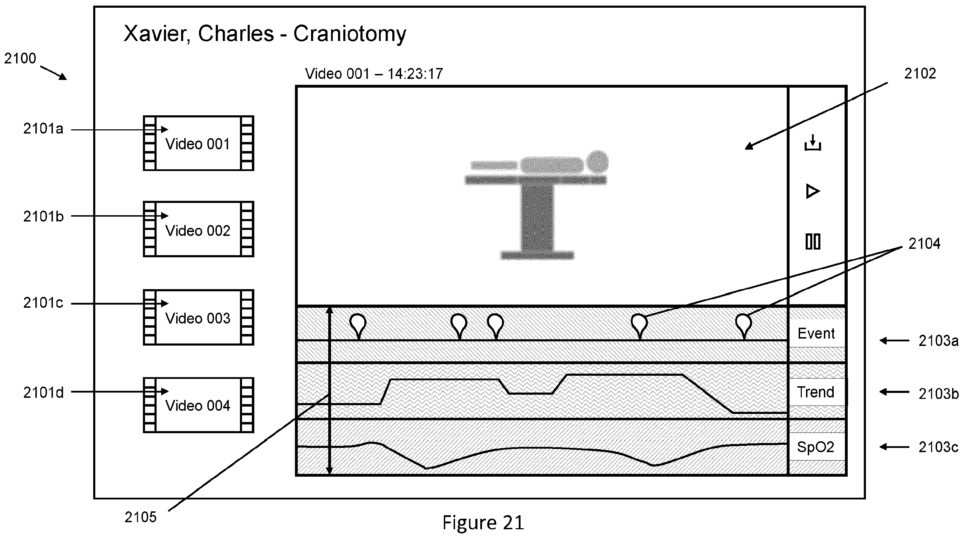

An exemplary graphical user interface for displaying multiple data streams from an OR in a swim-lane format is shown in Figure 21. As shown in Figure 21, a graphical user interface 2100 comprises a plurality of selectable procedure icons 2101a-d, each selectable procedure icon 2101a-d being associated with a procedure that has taken place in the OR. Each selectable procedure icon 2101a-d is also associated with stored data streams that were captured by data source devices in the OR during the procedure.

The graphical user interface 2100 further comprises a window 2102 configured to display a video stream from the OR associated with the selected procedure icon 2101a-d. The graphical user interface 2100 in this embodiment has a single window 2101, however, it will be appreciated that in other embodiments the graphical user interface 2100 may be provided with more than one window 2102, and configured to display more than one video stream captured by different cameras in the OR during a procedure.

The graphical user interface 2100 further comprises a plurality of swim-lanes 2103a-c, each lane 2103a-c displaying a data stream from a data source device in the OR that is associated with the selected procedure icon 2101a-d. Accordingly, the graphical user interface 2100 is configured to simultaneously display a video stream and multiple data streams captured during a procedure by data source devices in the OR.

In the embodiment of Figure 21, the plurality of lanes 2103a-c comprise: a video time and event lane 2103a, a surgical bed Trendelenburg angle lane 2103b, and a patient blood oxygen level lane 2103c. The lanes 2103a-c are displayed horizontally across the graphical user interface 2100, each lane 2103a-c being parallel to the other lanes, and arranged one above the other, directly below the video stream window 2102.

The video time and event lane 2103a displays a timeline for the video stream captured by a camera in the OR, and event markers 2104 indicating any events or objects tagged in the video stream.

The surgical bed Trendelenburg angle lane 2103b shows the Trendelenburg angle of the surgical table in the OR, indicating when the Trendelenburg angle is increased or decreased during the procedure by raising or lowering a marker in the lane. As such, the surgical bed Trendelenburg angle lane 2103b shows a graphical representation of the Trendelenburg angle of the surgical table over time. The data stream for the Trendelenburg angle lane 2103b is captured from position sensors, such as accelerometers, in the surgical table in the OR.

The patient blood oxygen level lane 2103c shows the blood oxygen level of the patient throughout the procedure. The patient blood oxygen level lane 2103c shows the blood oxygen level of a patient on the surgical table in the OR, indicating when the patient's blood oxygen level is increased or decreased during the procedure by raising or lowering a marker in the lane. As such, the patient blood oxygen level lane 2103c shows a graphical representation of the patient's blood oxygen level over time. The data stream for the patient blood oxygen level lane 2103c is captured from a blood oxygen sensor that is worn by the patient in the OR during the procedure.

The lanes 2103a-c are aligned and synchronised with each other to show the respective data streams across the entire procedure, starting at the beginning of the procedure on the left hand side, and ending at the end of the procedure on the right hand side. In the embodiment of Figure 21, each lane 2103a-c displays a line graph. The line graph illustrates the data with respect to time. Accordingly, the data streams 2103a-c effectively show line graphs depicting the profile of the data across the duration of the procedure. This enables a viewer to see, all at once, how the data in each lane 2103a-b changed throughout the procedure. Although the data streams in lanes 2103a-c are depicted as line graphs, it will be appreciated that in other embodiments a lane may display a data stream in another format, but still synchronised with the video stream displayed in the window 2102. For example, a lane may display a data stream as a bar graph, stacked columns, or s scatterplot.

The data streams shown in the lanes 2103a-c are synchronised by a comparison of timestamps associated with each of the data streams.

A navigation bar 2105 is displayed on the graphical user interface 2100 over the lanes 2103a-c. The navigation bar 2105 indicates the position of the procedure and the video stream that is currently being shown in the window 2102. A viewer of the graphical user interface 2100 may select the navigation bar and drag the navigation bar along any of the lanes 2103a-c to change the position of the video stream that is displayed on the window 2102. Accordingly, each lane 2103 acts as a slide bar for the video stream displayed in window 2102. A viewer may also select a particular point on one of the lanes 2103a-c or an event 2104 on the video time and event lane 2103a to change the position of the video stream that is displayed on the window 2102 to the corresponding position in the video stream.

The lanes 2103 provide a viewer with an enhanced picture of what was happening during the procedure, and enable the viewer to identify points of interest in a procedure, such as times in the procedure when the medical practitioner wanted to tag an object or an event, times when the surgical bed angle was altered, and times when the patient's blood oxygen level changed. Displaying information about the medical practitioner's tags, the medical devices, and the patient's vitals all at the same time may ensure that the information that is most interesting and useful to a viewer is directly and immediately accessible to the viewer. It will be appreciated that other data streams may be displayed on the graphical user interface 2100 in addition to or as an alternative to the lanes 2103a-c. For example, a patient heartrate lane may be displayed, showing the patient's heartrate over time during the procedure, a medical device lane may be displayed, showing when and/or how a medical device was used during the procedure, and an audio lane may be displayed, showing sound volume levels in the OR during the procedure.

### EXEMPLARY OR CONTROL SYSTEM

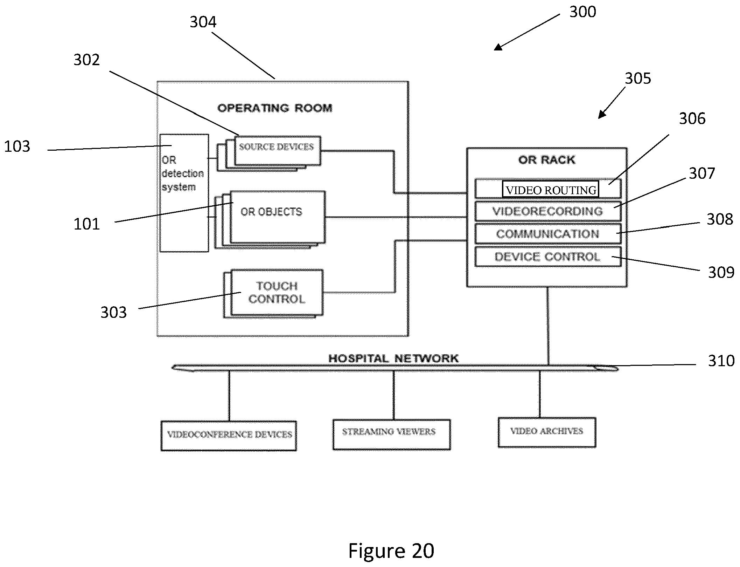

An exemplary OR control system (which may also be referred to as an OR integrated system herein) that may implement aspects of the present disclosure will now be described in relation to Figure 20. Outside of the OR 304, the OR integrated system 300 comprises a control centre 305 for the OR integrated system 300 housed in an OR rack. The control centre 305 is connected to the OR detection system 103 via wired or wireless connection. The OR detection system 103 is as described in Figure 1. Figure 20 shows "source devices" 302 which may include the data source devices such as video cameras and microphones discussed in relation to Figure 1, but also other source devices such as medical devices that provide data to the OR rack. The control centre may also be connected to one or more of the physical OR objects 101, such as to certain medical devices (the operating table, trocar, endoscope etc.), but may not be connected to all of them (e.g. the surgeon), or in fact any of them, depending on the use case. The control centre is connected to a the touch control 303 from which the surgeon may e.g. control certain devices in the OR 304, route audio video data to certain displays within the OR, record the medical procedure, issue communications onto the hospital network, etc. Here the connections are provided by suitable cabling, but may alternatively be provided by connection over a local network or via an internet connection. The control centre 305 performs a number of functions. These are signal routing shown schematically in Figure 20 as video routing block 306, video and image recording shown schematically in Figure 20 as video recording block 307, data communication/conferencing shown schematically in Figure 20 as communication block 308, and OR system control shown schematically in Figure203 as device control block 309. These functions may be implemented in separate hardware units or in a single hardware unit, or may be implemented as a mixture of hardware and software.

In the present example, the video routing block 306 performs signal routing operations. The video routing block 306 may control the distribution of both video signal and medical images from the source devices 301 to OR medical monitors, other units of the OR control system, memory archives, to external devices via the hospital network 310, and to the processing server 106, which may be provided on the OR rack 305, on the hospital network 310 or on an external network. Monitors can be suspended into ceiling arms or installed inside walls. The distribution of data from the data sources 103 to the other components of the system 300 is realized through wirings and video connections which are considered part of the overall integrated system. In this example, a medical practitioner may controls the routing of signals from particular source devices 103 to particular destinations from the touch control unit 303 by sending instructions to the OR rack. The routing units may be configured to route the images/video received from a number of the source devices to the touch control unit so that the medical practitioner has a live feed of the images/video being captured by the source devices in the OR. The medical practitioner may, for example, be presented with a preview screen showing the images currently being received from each source device and the images currently being displayed on OR monitors. From this, the user can select which images to display on which screens in the OR. This selection controls the routing unit to route the signals accordingly. It will be appreciated, however, that the system may also be arranged so that the image data from certain source devices are automatically routed to certain destination devices without user interaction. This may be arranged ahead of time by configuring the system appropriately. The user may also select image data from certain source devices to be presented on certain destination devices without any preview images being presented on a touchscreen.

The video recording block 307 controls the video and image capture process, from one or two different and simultaneous medical video feeds, for and educational and training purposes. Any video or image signals being received from source devices may be passed as inputs to video routing unit 306 for routing to appropriate destination, or to other units of the control center 305. For example, if it is instructed to record signals from a particular source device, the routing unit receiving those signals may route the signals into a memory of the control center 305 for storage and subsequent access by the system. When the user wishes to access a stored particular image (e.g. an x-ray image) and subsequently present the image on a desired OR monitor for viewing, the control center may access the image and may route the image to the selected monitor for viewing.

The communication block 308 controls video streaming functionality, providing the transmission of A/V (audio video) feeds produced inside the OR through a Hospital network 110 for communication, educational and conferencing purposes. In one example, video signals received at the video routing unit 306 from a source device may be passed from the video routing unit to the communication unit 308 for use in video conferencing, etc.

Finally, the device control block 309 is implemented in software and allows control and management of each functional unit as well as devices in the OR. This facilitates the ergonomics of the OR by uniting into a single console the command of all medical and non-medical devices, such as Surgical and Room Cameras, Surgical Lights and Surgical Tables. The control block software may be in communication with the touch control panel 303, allowing a medical practitioner to control and command the OR devices in accordance with the user's instructions.

Together, these units provide various functionality to allow the control system to control the distribution of data and signals to and from the OR and control the distribution of data and signals between devices within the OR.

In operation, the OR detection system 103 functions according to the aspects of the disclosure discussed herein and operates alongside the functions of the OR rack 305 in order to facilitate and improve object tracking, tagging and control in the OR. For example, the surgeon may control all the functionality of the control system 305 from the touch control 303, whilst also issuing point and speech commands which are picked up and actioned by the OR detection system 103. In this way, the OR detection system 103 may be integrated into the OR functionality to supplement and improve OR operation. The OR detection system 103 may process the data in accordance with the techniques described herein, tags the data as appropriate, tracks objects within the OR as appropriate and sends alerts or additional information resulting from the processing back to the OR, either for display to the surgeon e.g. through the touch control panel 303, or for device control and adjustment, for example through the device control unit 309.

### FURTHER EXAMPLES AND EMBODIMENTS OF THE PRESENT DISCLOSURE

In the illustrated embodiments some components may be integrated at a circuit, package or die level.

In the illustrated embodiments of the invention the system may comprise a computing and/or electronic device.

Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

The computer executable instructions may be provided using any computer-readable media that is accessible by computing based device. Computer-readable media may include, for example, computer storage media such as a memory and communications media. Computer storage media, such as a memory, includes volatile and non-volatile, removable and non-removable media implemented in any method or technology for storage of information such as computer readable instructions, data structures, program modules or other data. Computer storage media includes, but is not limited to, RAM, ROM, EPROM,

EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A method of detecting objects in a video stream of an operating room comprising:
receiving a video stream of an operating room ;
receiving an audio stream of the operating room;
detecting, from video data of the video stream, a first data object corresponding to a first physical object within the operating room;
detecting, from the audio stream, audio data corresponding to an audio event within the operating room;
determining that the audio data is associated with the first data object; and
in response to determining that the audio data is associated with the first data object, detecting, from video data of the video stream, a second data object in dependence on the first data object, the second data object corresponding to a second physical object located in the operating room.

2. The method of claim 1, wherein detecting the second data object in dependence on the first data object comprises identifying a portion of the video data in dependence on the first data object, and detecting a second data object in the portion of the video data, wherein the portion corresponds to a spatial region of the operating room.

3. The method of claim 2, wherein identifying a portion of the video data in dependence on the first data object comprises identifying a portion of the video data of a pre-determined shape and/or having a predetermined orientation relative to the first data object.

4. The method of any of claims 1 to 3, wherein the first physical object corresponds to a medical practitioner.

5. The method of claim 4, wherein the first physical object corresponds to a medical practitioner performing a pointing gesture within the operating room, wherein identifying the second data object in dependence on the first data object comprises identifying a portion of the video data corresponding to a spatial region of the operating room to which the medical practitioner is pointing, and identifying a second data object in the portion of the video data.

6. The method of any preceding claim, wherein the second physical object is a medical device, patient or another medical practitioner located in the operating room, and/or wherein the audio event is a spoken command issued by a medical practitioner within the operating room.

7. The method of any preceding claim, further comprising:
detecting , from video data of the video stream, a third data object corresponding to a third physical object within the operating room;
detecting, from the audio stream, audio data corresponding to a second audio event within the operating room;
determining that the audio data corresponding to the second audio event is associated with the third data object; and
in response to determining that the audio data corresponding to the second audio event is associated with the third data object, detecting, from video data of the video stream, a fourth data object in dependence on the third data object, the fourth data object corresponding to a fourth physical object located in the operating room.

8. The method of any preceding claim, wherein determining that the audio data is associated with the first data object comprises determining, from the audio data and the video data, that the first physical object and the audio event together represent a trigger to identify the second data object and/or to control the physical object in the video data based on the first data object.

9. The method of claim 8, wherein the trigger is a pre-determined sequence in which the first data object and the audio data is detected, the sequence comprising one or more of
- a predetermined order of detection of the first data object and the audio data; and
- a threshold time between the detection of the first data object and the audio data.

10. The method of any preceding claim, further comprising applying a metadata tag to the second data object identified in the region of the video data.

11. The method of any preceding claim, further comprising tracking the second data object in the video data, wherein tracking the second data object comprises, tracking the movement of the second data object within the video data so as to track the movement of the second physical object within the operating room.

12. The method of claim 11, further comprising issuing alerts to the operating room if the movement of the physical object within the operating room breaches one or more predefined thresholds.

13. The method of any preceding claim, wherein the video stream is formed from a plurality of video sources, the video data of the video stream is a 3D pixel representation of the operating room, and/or wherein the video stream is temporally synchronised with the audio stream.

14. A system for detecting objects in a video stream of an operating room comprising:
a processor configured to:
receive the video stream of the operating room;
receive an audio stream of the operating room;
detect, from video data of the video stream, a first data object corresponding to a first physical object within the operating room;
detect, from the audio stream associated with the video stream, audio data corresponding to an audio event within the operating room;
determine that the audio data is associated with the first data object; and
in response to determining that the audio data is associated with the first data object, detect, in video data of the video stream, a second data object in dependence on the first data object, the second data object corresponding to a second physical object located in the operating room.

15. A computer-readable medium is provided having executable instructions stored thereon that when executed, causes any of the system of claim 14 to carry out any of the methods of claims 1 to 13.
